# EUROPEAN PATENT APPLICATION

(11) **EP 3 629 409 A1**
(43) Date of publication of application: **01.04.2020**
(21) Application number: 18196870.2
(22) Date of filing: 26.09.2018
(51) Int. Cl.: H01M 4/88, H01M 4/92, H01M 8/1018

(54) **METHOD OF TREATING A PLATINUM-ALLOY CATALYST, AND DEVICE FOR CARRYING OUT THE METHOD OF TREATING A PLATINUM-ALLOY CATALYST**

(71) Applicant: Kemijski Institut / National Institute of Chemistry, 1000 Ljubljana (SI)
(72) Inventor: Gatalo, Matija, 1000 Ljubljana (SI); Hodnik, Nejc, 1000 Ljubljana (SI); Bele, Marjan, 1000 Ljubljana (SI); Jovanovic, Primoz, 1000 Ljubljana (SI); Gaberscek, Miran, 1230 Ljubljana (SI); Grom, Matic, 4274 Zirovnica (SI)
(74) Representative: Zacco GmbH

(57) **Abstract**

The present invention refers to a method of treating a platinum-alloy catalyst, comprising the steps of:
A) providing a platinum-alloy catalyst, which comprises platinum (Pt) and at least one metal (M), which is less noble than platinum; B) exposing the catalyst to an acidic or basic medium, and exposing the catalyst to an adsorptive gas, wherein during step B) the catalyst is not subjected to an external electrical current or voltage.

Moreover, a device for carrying out the method of treating the platinum-alloy catalyst is provided.

## Description

The invention relates to a method of treating a platinum-alloy catalyst and a device for carrying out the method of treating a platinum-alloy catalyst.

Platinum-alloy catalysts are employed in various fields of chemistry.

For instance, platinum-alloys are under investigation as catalysts for electrochemical reactions, such as the hydrogen oxidation reaction (HOR) taking place at the anode, or the oxygen reduction reaction (ORR), taking place at the cathode of proton exchange membrane fuel cells (PEMFCs). PEMFCs are expected to compete and eventually replace conventional combustion engines in the automotive industry. However, currently most state of the art electrocatalysts used at the anode and cathode of PEMFCs are still platinum only catalysts, which are expensive due to the high cost of platinum. Moreover, the activity of platinum only catalysts in particular for the ORR requires improvement in order to increase fuel cell efficiency and reduce the amount of catalyst required.

By alloying platinum with less noble and less expensive metals, catalysts can be achieved, which are at the same time more active and less expensive. For instance, alloying platinum with a less noble metal has been reported to result in platinum-alloy catalysts with excellent electrocatalytic activity for the ORR.

However, as synthesized or as purchased platinum-alloy catalysts commonly do show very poor catalytic activity (e.g. for the ORR), unless they undergo a further treatment prior to usage.

The initially low catalytic activity of as synthesized or as purchased platinum-alloy catalysts is in part attributed to the presence of impurities at the catalyst surface. For many reactions, such as the ORR or HOR, it is the platinum atoms, which form the active sites of the platinum-alloy catalyst. Therefore, those less noble metal atoms of the platinum-alloy, which are present at the surface of the catalysts (e.g. as adatoms), typically are the major reason for the low catalytic activity of the as synthesized platinum-alloy catalyst. Namely, after synthesis frequently a large fraction of the catalyst surface is covered by the less noble metal atoms blocking accessibility of platinum active sites at the surface of the platinum-alloy. The superficial less noble metals of the platinum-alloy catalyst are therefore also frequently referred to as impurities, as they decrease the catalytic activity.

Thus platinum-alloy catalysts require to undergo a treatment in order to remove the less noble metal from the surface of the catalyst. That is deallyoing or leaching of the less noble metal from the surface of the platinum-alloy is required. In this way a platinum-alloy catalyst is achieved, which has the composition of a platinum-alloy in the inside, but the outermost atomic layer(s) of the platinum-alloy catalyst are ideally composed of platinum only, thus forming a platinum overlayer. Such a platinum overlayer is frequently referred to as a "platinum skin" or a "platinum skeleton" overlayer (having a thickness, which may range from a single atomic layer of platinum up to a thickness of about 2 nm). By removing the less noble metal from the catalyst surface, the catalytically active platinum becomes accessible and the catalytic activity is increased. Therefore the treatment may be referred to as "catalyst activation".

However, while the less noble metal of the platinum-alloy catalyst needs to be removed from the catalyst surface, it shall not be removed from the inside of the platinum-alloy catalyst. The presence of the less noble metal in the inside of the platinum-alloy alters the structural and/or electronic properties of the platinum-alloy compared to platinum only materials and thus causes effects known as ligand and/or strain effect. For instance, the ligand/strain effect, along with a better utilization of platinum, is held responsible for the improved activities of platinum-alloy catalysts compared to platinum only catalysts with respect to the ORR. Namely, the less noble metal may induce strain and therefore alter the structure of the platinum overlayer, which is crucial for the catalytic performance of the platinum-alloy catalyst. A complete removal of the less noble metal from the platinum-alloy thus eventually results in a decline of catalyst activity.

Therefore, there is a need for methods of treating platinum-alloy catalysts, in order to remove surface impurities such as superficial less noble metals of the platinum-alloy in order to "activate" the catalyst.

For instance, for platinum-alloy catalysts used to catalyse the ORR, currently two ways of treatment are known to reduce surface impurities and thus increase catalyst activity:
- electrochemical activation (EA), and
- chemical activation (CA).

Electrochemical activation (EA):
Electrochemical activation of platinum-alloy electrocatalysts is performed using an electrochemical cell. Therefore, it is sometimes referred to as *in-situ* electrochemical activation (in-situ EA), as the activation is performed inside the electrochemical cell, wherein catalyst activity measurements can be performed or wherein the catalyst is utilized to catalyse the desired reaction.

Standard laboratory electrochemical cells are usually employed, for instance three-electrode half-cell-configurations as described by Allen J. Bard and Larry R. Faulkner: "Electrochemical Methods, Fundamentals and Applications" 2001, 2nd Edition, ISBN 978-0-471-04372-0, John Wiley & Sons, Inc., Chapter 1.3.4, especially pages 24-27.

In a respective electrochemical cell, the platinum-alloy catalyst is electrically contacted to an electrode, in particular a working electrode. For this purpose the so called thin-film method is usually applied. Namely, a thin film of catalyst material is deposited on the working electrode. This can be achieved by preparing a suspension of the platinum-alloy catalyst, which is thereafter dried at the surface of the working electrode. In this way a thin film of catalyst in electrical contact with the working electrode is obtained. If the catalytic activity of the catalyst is to be determined it is beneficial to use a rotating disc electrode (RDE) as a working electrode. The basic principles of RDE are for instance summarized by Allen J. Bard and Larry R. Faulkner: "Electrochemical Methods, Fundamentals and Applications" 2001, 2nd Edition, ISBN 978-0-471-04372-0, John Wiley & Sons, Inc., Chapter 9.3. Measurements of thin films deposited on a RDE as working electrode, are referred to as thin film rotating disc measurements (TF-RDE).

After bringing the platinum-alloy catalyst into electrical contact with the working electrode of the electrochemical cell, the electrochemical cell is fully assembled and the working electrode with the catalyst on top is brought into contact with a suitable electrolyte. Thereafter electrochemical activation can be performed by subjecting the catalyst to an external electric current and/or potential. That is, the catalyst can be subjected e.g. to galvanostatic, potentiostatic, potendiodynamic conditions or similar conditions, which all have in common that the catalyst is subjected to an external current or voltage. For this purpose the electrodes of the electrochemical cell can be controlled using a potentiostat, however in principle also other power sources may be used.

Mostly, electrochemical activation is performed by subjecting the platinum-alloy catalyst to potentiodynamic cycling, that is cyclovoltammetry (CV). This allows to precisely control the potential window, number of potential cycles and scan rate.

By subjecting the platinum-alloy catalyst to suitable electrical currents and/or potentials inside the electrochemical cell, dissolution of the less noble metal of the platinum-alloy catalyst is achieved, thus resulting into deallyoing and/or leaching of the less noble metal from the surface of the platinum-alloy catalyst. For this purpose potential sweeps, as applied during cyclovoltammetry, are very effective. The dissolved less noble metal accumulates in the electrolyte. In this way, a platinum overlayer can be obtained and the activity of the catalyst for the ORR is increased.

When performing cyclic voltammetry, the changes occurring at the catalyst surface, are reflected by the change of the shape of the recorded cyclovoltammograms of the platinum-alloy catalyst. While initially, the shape of the cyclovoltammogram is usually substantially determined by the less noble metal(s), it eventually approaches the shape, which is typical for platinum.

Regardless of the exact *in-situ* protocol conditions, the electrocatalyst is usually considered as fully activated once a stable cyclovoltammogram is achieved over a period of several cyclovoltammograms. That is, a cyclovoltammogram is obtained, which is characterized by the features, which are typical for platinum and which does not undergo further significant changes.

However, while thin film measurements are suitable for studying platinum-alloy catalysts, they are only applicable for very low amounts of catalyst. The amount of platinum-alloy catalyst brought into electrical contact with the working electrode is typically in the range of only several micrograms of platinum-alloy (pg) and cannot be easily scaled up. While this type of electrochemical activation is suitable on a laboratory scale in order to investigate catalyst performance, it is not applicable for large amounts of catalyst. Therefore, thin film electrochemical activation or similar types of electrochemical is not applicable at an industrial scale.

As an alternative, electrochemical activation directly inside the membrane electrode assembly (MEA) of a proton exchange membrane fuel cell has been proposed. However, in contrast to the thin film electrochemical activation method, wherein a very small amount of platinum-alloy catalyst is subjected to a comparatively large amount of electrolyte (e.g. several µg of platinum-alloy catalyst are subjected to an electrolyte volume of typically about 100 mL), the ratio of amount of electrocatalyst compared to volume of the polymer membrane electrolyte inside a fuel cell is much higher. The reason for this is that the polymer membrane needs to be thin in order to avoid a high internal resistance. Moreover, the amount of catalyst applied inside a fuel cell is in the milligram-range (mg) instead of µg range as the case in thin film measurements, as mentioned above. In consequence, the concentration of the dissolved less noble metals of the platinum-alloy catalyst inside the fuel cell is much higher. Due to this the less noble metal may redeposit on the electrode surface of both anode and/or cathode to a large degree. There it again will act as an impurity, decreasing catalyst activity. In addition, already small amounts of metallic impurities have been observed to cause severe polymer-membrane degradation in PEMFCs. Moreover, metal ions are known to replace protons in the polymer-membrane-electrolyte and thus reduce its conductivity resulting in a loss of fuel cell efficiency due to increased membrane-electrolyte resistance.

Electrochemical activation directly inside a fuel cell thus is less effective and furthermore causes severe problems concerning other fuel cell components, such as the polymer-membrane.

### Chemical activation (CA):

In contrast to electrochemical activation, chemical activation is performed without subjecting the platinum-alloy catalyst to an external potential and/or current. That is, the activation does not require the usage of an electrochemical cell. Instead, the activation is performed by subjecting the catalyst to a chemical treatment, such as subjecting the catalyst to an acid. As the chemical activation does not require to be performed in an electrochemical cell, it is often referred to as ex-situ chemical activation (ex-situ CA).

Several procedures for ex-situ chemical activation of platinum-alloy catalysts have been proposed.

Commonly, the platinum-alloy catalysts are activated using acids, such as H₂SO₄ or HClO₄. However, even though H₂SO₄ and HClO₄ are strong acids, often elevated temperatures, such as 80°C or higher and long times of exposure (e.g. more than a day) are required to remove the less noble metal. Moreover, for some metals such as copper, even under these conditions, complete activation is not achieved.

Therefore, as chemical activation is often not sufficient, additional in-situ electrochemical activation via cyclic voltammetry is required in many studies drawn to platinum-alloy catalysts before carrying out ORR polarization experiments.

In summary, known methods of electrochemical activation of platinum-alloy catalysts are not suitable for large scale industrial applications. In addition, known methods of chemical activation are time demanding, require aggressive acids, elevated temperatures and still mostly do not provide sufficient activation if no further electrochemical activation is performed.

Therefore, it is an object according to a first aspect of the present invention to provide a method of treating a platinum-alloy catalyst, which is improved with respect to the disadvantages of the above mentioned methods.

It is a further object to specify a device according to a second aspect of the invention for carrying out the method according to the first aspect of the present invention. These objects are achieved by means of the subject-matter of the independent patent claims. The dependent patent claims relate to further configurations and developments.

The present invention relates to a method of treating a platinum-alloy catalyst, comprising the steps of:
A) providing the platinum-alloy catalyst, which comprises platinum (Pt) and at least one metal (M), which is less noble than platinum,
B) exposing the catalyst to an acidic or basic medium, and
   exposing the catalyst to an adsorptive gas,
   wherein during step B) the catalyst is not subjected to an external electrical current or voltage.

The term platinum-alloy catalyst refers to a catalyst comprising an alloy, which comprises or consists of platinum (Pt) and at least one metal (M), which is less noble than platinum. For instance, the alloy comprises exactly one or exactly two metals, which are less noble than platinum.
For example, the platinum-alloy catalyst is a powder. For instance the powder is formed of particles comprising or consisting of the platinum-alloy catalyst. For instance, the platinum-alloy catalyst further comprises a support, such as a carbon support. For instance, the platinum-alloy has the shape of nanoparticles, which are distributed on the carbon support.

As known to the skilled artisan, the nobility of a metal is determined by its standard potential (also referred to as "standard electrode potential" or "standard reduction potential"). The standard potential is the measure of the individual potential of a reversible electrode at standard state, i.e. with solutes at an effective concentration of 1 mol dm⁻³ and gases at a pressure of 1 atm. Values for standard potentials of all common metals are tabulated at 25°C and with reference to a standard hydrogen electrode (SHE). Metals having a higher standard potential (that is a more positive standard potential) are more noble than metals with a lower standard potential. The nobility of a metal with respect to other metals thus can easily by determined by the position of the metal within the so called galvanic series, which lists the individual metals based on their standard potentials. Tables of standard potentials can be found for instance, in Allen J. Bard and Larry R. Faulkner: "Electrochemical Methods, Fundamentals and Applications" 2001, 2nd Edition, ISBN 978-0-471-04372-0, John Wiley & Sons, Inc., pages 808-809.

In the case of the present invention the at least one metal (M), which is less noble than platinum is thus a metal having a lower standard potential than platinum. Preferably, the at least one metal M is selected from the group consisting of transition metals and rare-earth metals, which are less noble than platinum.

For example, the at least one metal M, which is less noble than platinum, is selected from the group consisting of copper (Cu), nickel (Ni), cobalt (Co), iron (Fe), silver (Ag), palladium (Pd), chromium (Cr), titanium (Ti), lead (Pb), tin (Sn), molybdenum (Mo), Yttrium (Y) and Gadolinium (Gd), preferably it is selected from Cu, Ni, Co and Pd.

The term platinum-alloy catalyst refers to catalysts, which are capable of catalyzing chemical and/or electrochemical reactions, such as the so called oxygen reduction reaction (ORR) that is the reduction of O₂ to H₂O. This reaction is known to be a limiting factor for PEMFC efficiency and requires catalysts with excellent activity. The term platinum-alloy catalyst also includes platinum-alloys, which after synthesis do show no or little catalytic activity and only become active after being subjected to an activation treatment (chemical or electrochemical activation).

The term activity or catalytic activity preferably refers to catalytic activity with respect to the ORR (ORR-activity). The term activation preferably refers to an increase of ORR-activity.

The ORR-activity of a platinum-alloy catalyst can be expressed by means of specific activity (SA) and/or mass activity (MA). The specific activity is an activity normalized with respect to the catalyst surface area. That is, the activity is normalized with respect to the so called electrochemically active surface area (ESA), which in case of the ORR (and/or HOR) is determined by the platinum atoms present at the surface of the platinum-alloy catalyst. The ESA thus corresponds to the platinum-surface area of the platinum-alloy catalyst. In case the platinum-alloy catalyst comprises a carbon support, the carbon support does not contribute to the ESA, as it does not catalyze the ORR. The mass activity is an activity normalized with respect to the mass of platinum present in the platinum-alloy catalyst. That is, the SA refers to the so called kinetic current for the ORR at a given potential (typically 0.9 V_{RHE}; RHE = Reversible Hydrogen Electrode) normalized by the ESA. It is commonly expressed with the unit [mA·cm⁻²]. The MA refers to the so called kinetic current for the ORR at a given potential (typically 0.9 V_{RHE}) normalized by the mass of platinum present in the platinum-alloy catalyst. It is commonly expressed with the unit [A·mg⁻¹Pt]. The ESA can for instance be determined electrochemically via adsorption of a carbon monoxide monolayer on the catalyst surface (the adsorption of CO being performed at a controlled potential, e.g. at 0.05 V vs. RHE) and subsequent oxidation of the monolayer via cyclic voltammetry (so called CO electrooxidation experiments). The ESA is then calculated from the charge required for the CO to be oxidized. The ESA is commonly expressed using the unit [m²·g⁻¹Pt]. The specific activity and mass activity are linked with each other via the ESA of the catalyst by the following equation: MA = SA • ESA.

The meaning and determination of the SA, MA and ESA are known to the skilled artisan. When referring to SA, MA and ESA in the present application, the respective values are determined experimentally via thin film rotating disc electrode measurements (TF-RDE). A detailed explanation of the experimental determination of SA, MA and ESA is provided at least by
- Mayrhofer et al., "Measurement of Oxygen Reduction Activities via Rotating Disc Electrode Method: From Pt Model Surfaces to Carbon-Supported High Surface Area Catalysts." Electrochimica Acta 2008, 53, 3181-3188; and by
- Schmidt et al., "Characterization of High-Surface Area Electrocatalysts Using a Rotating Disk Electrode Configuration" J. Electrochem. Soc. 1998, 145, 2354-2359.

These articles define a standard when it comes to the determination of catalytic activity of electrocatalysts for the ORR. The determination of HOR activities can also be performed applying TF-RDE measurements. All measurements of the SA, MA and ESA given in this application are performed according to the standards as described in said articles. The description of the methods of determination of SA, MA and ESA of said articles are incorporated herein, by reference.

The method according to the present invention at least comprises the steps of providing the platinum-alloy catalyst (step A) and the step of exposing the platinum-alloy catalyst (step B) to an acidic or basic medium and to an adsorptive gas.

The term medium refers to liquids, gases or solids, preferably liquids. For instance, the acidic or basic medium is a liquid comprising an acid or a base or it is consisting of the acid or the base. For instance the medium is an aqueous solution of an acid or a base.

Exposing the platinum-alloy catalyst to an acidic or basic medium means that the platinum-alloy catalyst is brought into physical contact with the acidic or basic medium. At least parts of the surface, but preferably the complete surface, of the platinum-alloy catalyst is brought into physical contact with the acidic or basic medium. For instance, the catalyst is dispersed in the acidic or basic medium. For instance, the catalyst is dispersed or suspended in an aqueous solution of an acid or a base. Moreover, the catalyst can be positioned in a fixed location, such as a fixed bed of a fixed bed reactor or in any other kind of retaining device, and the acidic or basic medium flows around the catalyst, thus coming into physical contact with the catalyst.

The acidic or basic medium has the function of targeting the surface impurities and the less noble metals at the surface of the platinum-alloy catalyst. The acid or base constituting the medium or being present in the medium coordinates and subsequently dissolves the less noble metal(s). Exposing the platinum-alloy catalyst to an acidic or basic medium thus results in the at least partial dissolution of the less noble metal(s) present at the catalyst surface. In this way a platinum overlayer is obtained. The platinum active sites are set free and the active surface area of the catalyst and thus catalyst activity is increased. The treatment of the present invention thus can be referred to as an activation of a platinum-alloy catalyst, in particular a chemical activation.

Contrary to standard treatments of chemical activation, the method of the present invention is characterized by the exposure of the platinum-alloy catalyst to an adsorptive gas.

The term adsorptive gas refers to a gas capable of adsorption to platinum, in particular a gas capable of chemisorption to (metallic) platinum. Namely, the molecules of the gas preferably are capable of forming a chemical bond with (metallic) platinum. For instance, the adsorptive gas is carbon monoxide (CO). Adsorptive gases, such as CO, bind strongly to the platinum sites at the surface of the platinum-alloy catalyst.

Exposing the platinum-alloy catalyst with an adsorptive gas means that the catalyst is brought into physical contact with the adsorptive gas. For instance, the acidic or basic medium comprises the adsorptive gas. For instance, the adsorptive gas is dissolved in the acidic or basic medium.
For instance, the platinum-alloy catalyst is exposed to a mixture comprising or consisting of the acidic or basic medium and the adsorptive gas. The mixture can be a dispersion comprising or consisting of the acidic or basic medium and the adsorptive gas.

The inventors of the present invention have observed that exposing a platinum-alloy catalyst not only to an acidic or basic medium, but in addition exposing the platinum-alloy catalyst to an adsorptive gas, surprisingly results in a much more effective and more complete activation of platinum-alloy catalysts. For instance, the inventors have observed that platinum-alloy catalysts do have a much higher ORR-activity if not only exposed to an acidic or basic medium, but if in addition being exposed to an adsorptive gas, such as carbon monoxide.

If the platinum-alloy catalyst is only exposed to an acidic or basic medium, the less noble metal partially dissolves. The less noble metal accumulates in the acidic or basic medium and tends to at least partially readsorb or redeposit at the surface of the platinum-alloy catalyst. This process hampers the formation of a pure platinum overlayer and thus hampers activation of the platinum-alloy catalyst.

It is believed by the inventors that by further exposing the platinum-alloy catalyst to an adsorptive gas, the adsorptive gas at least partially covers the platinum atoms present at the surface of the platinum-alloy catalyst. The adsorptive gas thus protects the platinum present at the surface of the platinum-alloy catalyst from readsorption or redeposition of the less noble metal(s) present in the acidic or basic medium.

In this way platinum surface sites are blocked at least partially by the adsorptive gas and readsorption and/or redeposition of the less noble metal to platinum present at the catalyst surface is significantly reduced. However, also further effects may contribute to the more effective activation of the platinum-alloy catalyst due to additional exposure to an adsorptive gas.

In summary, the treatment of the platinum-alloy catalyst is significantly more effective compared to a standard treatment, wherein the catalyst is exposed to an acid alone. In particular, the platinum-alloy catalyst is exposed to an acidic or basic medium and to the adsorptive gas at the same time. That is exposing to the acidic or basic medium and to the adsorptive gas takes place simultaneously.

The inventors of the present invention have found that exposing the catalyst simultaneously to the acidic/basic medium and the adsorptive gas results in a synergistic effect causing a significantly faster and/or more complete activation of the platinum-alloy catalyst. That is the less noble metal is removed in shorter time and/or more effectively. This is reflected in the higher ORR activities of platinum-alloy catalysts subjected to the inventive method compared to platinum-alloy catalysts subjected to a standard chemical activation without usage of an adsorptive gas, such as CO.

The inventors of the present invention have found that the activation of the catalyst taking place during step B) is very effective and thus in contrast to all known standard chemical activation processes no further electrochemical activation is required. For the activation - which takes place during step B) - the catalyst is not subjected to an external electrical current or voltage. The term external current or voltage refers to a current or voltage which is subjected to the catalyst via an electrode, i.e. via an external electrical power source, such as a potentiostat. Thus step B) does not have to be performed in an electrochemical cell. No potentiostat or other external electrical power source is required, which imposes a current or voltage on the catalyst. Preferably, step B) is not performed in an electrochemical cell. More preferably, the complete method is not performed in an electrochemical cell. As it is not necessary for the activation, which takes place during step B), to subject the catalyst to an external electrical current or voltage, the catalyst does not have to be brought into contact with an electrode for the treatment of the present invention. The inventive process thus can be performed outside of an electrochemical cell, for instance in a reactor, which is not an electrochemical reactor. Therefore, the inventive process can be easily scaled up and also applied on an industrial scale.

In summary, the method according to the present invention results in a more efficient removal of the less noble metal and other impurities from the surface of the platinum-alloy catalyst and thus results in higher catalytic activity (e.g. for the ORR). The process allows a more effective and faster activation of platinum-alloy catalysts than the case for most standard processes. That is, lower times of exposure to the acidic or basic mediums are required. Remarkably, a nearly complete activation with respect to the ORR can be observed, which for many platinum-alloy catalysts so far was only possible in case of electrochemical activation. Moreover, the method of the present invention does not require elevated temperatures or strong acids or bases or other aggressive reactants such as ozone (O₃) during the activation step. In addition, the process can be easily scaled up, as it does not require that the catalyst is subjected to an external voltage or current.

Activities, which so far had been only accessible when activating the platinum-alloy catalyst via TF-RDE in an electrochemical cell, now are also in the reach by mere chemical activation according to the method of the present invention. For many types of platinum-alloy catalysts, the method of the present invention thus for the first time allows sufficient activation to be performed on an industrial scale.

In the following preferred embodiments of the present invention are specified:
According to at least one embodiment, the method of treating a platinum-alloy catalyst is a post-synthesis method that is a method to which the catalyst is subjected at the end or after its synthesis.

According to at least one embodiment, the method of treating a platinum-alloy catalyst is a method of pre-treatment, preferably a pre-treatment to which the catalyst is subjected prior to incorporation into a fuel cell.

By using the method prior to incorporating the catalyst into a fuel cell, it is possible to perform the dissolution and dealloying of the less noble metal from the surface of the platinum-alloy catalyst outside of the fuel cell. In consequence, much less noble metal dissolves inside the fuel cell under fuel cell operation. In this way it is possible to avoid or at least reduce problems caused by metallic impurities inside the fuel cell. This is in particular of advantage in order to reduce redoposition of the metallic impurities at the electrodes of the fuel cell. As described above, metallic impurities do have a negative impact on the membrane stability and conductivity. These problems can be reduced, by performing the treatment of the present invention prior to incorporation of the catalyst into a fuel cell. According to at least one embodiment, the method of treating a platinum-alloy catalyst is a method of regeneration of a used platinum-alloy catalyst. For instance, during fuel cell operation impurities can adsorb at the surface of platinum-alloy catalysts. The method of the present invention can be employed to remove these impurities, before the catalyst is used again.

According to at least one embodiment the adsorptive gas is present in the acidic or basic medium during step B). For instance, the acidic or basic medium is purged with the adsorptive gas.

According to at least one embodiment exposing the platinum-alloy catalyst to an acidic or basic medium and to the adsorptive gas, means exposing the platinum-alloy catalyst to a mixture or dispersion comprising or consisting of the acidic or basic medium and the adsorptive gas.

According to at least one embodiment the adsorptive gas is at least partially dissolved in the acidic or basic medium.

According to at least one embodiment bubbles of the adsorptive gas are present in the acidic or basic medium.

According to at least one embodiment the acidic or basic medium is saturated with the adsorptive gas. A high concentration of the adsorptive gas in the acidic or basic medium allows to utilize the adsorptive gas very effectively and thus facilitates catalyst activation.

According to at least one embodiment the platinum-alloy catalyst - as provided in step A) - comprises impurities at a surface of the platinum-alloy catalyst. For instance, the impurities comprise carbon.

According to at least one embodiment the platinum-alloy catalyst - as provided in step A) - has a surface, which is at least partially covered with the at least one metal (M), which is less noble than platinum.

According to at least one embodiment the adsorptive gas is carbon monoxide (CO).

Carbon monoxide shows strong chemisorption with platinum located at the surface of platinum-alloys. CO binds stronger to platinum than most metals, e.g. even stronger than Cu. It is thus capable of effectively blocking platinum sites at the surface of the platinum-alloy catalyst against readsorption of the less noble metal(s) of the alloy. Using carbon monoxide thus is very effective in facilitating the removal of the less noble metal and other impurities and thus activating the platinum-alloy catalyst.

Moreover, CO can be easily removed from the surface of the platinum-alloy catalyst via oxidation to CO₂ for instance at air or in an aqueous environment, wherein no CO is dissolved.

According to at least one embodiment exposing the catalyst to adsorptive gas means exposing the catalyst to a gas mixture, which comprises the adsorptive gas and at least one or exactly one diluent gas.

According to a further development of the previous embodiment the diluent gas is a gas selected from the group consisting of N₂, Ar and other inert gases.

According to at least one embodiment step B) is performed in the absence of oxidizing (e.g. O₂, O₃) or reducing gases (e.g. H₂), which are different from the adsorptive gas.

According to at least one embodiment the portion of the adsorptive gas (such as CO) with respect to the overall volume of the gas mixture is at least 10 vol.%, preferably at least 30 vol.%, more preferably at least 70 vol.%, in particular at least 90 vol.%, such as more than 95 vol.%, e.g. 100 vol%. In the latter case no diluent gas or any other gas apart from the adsorptive gas, is present in step B).

According to at least one embodiment the platinum-alloy catalyst is an electrocatalyst that is a catalyst for catalyzing an electrochemical reaction. For instance, the catalyst is a catalyst for the HOR and/or the ORR. Preferably, the catalyst is an ORR-catalyst. For instance, the catalyst is a fuel cell catalyst, i.e. a catalyst, which is employed at the anode (catalyzing HOR) or cathode (catalyzing ORR) of a fuel cell, such as a proton exchange membrane fuel cell.

According to at least one embodiment the platinum-alloy of the platinum-alloy catalyst has the general formula

PtMₓ,

wherein M is at least one metal selected from the group consisting of Cu, Ni, Co, Fe, Ag, Pd, Cr, Ti, Pb, Sn, Mo, Y and Gd, and wherein x fulfils the requirement 0 < x ≤ 5.

These types of platinum-alloy catalysts do have a significantly improved catalytic activity for the ORR compared to platinum only catalysts (after activation). They are thus promising candidates for fuel cell applications. Preferably the at least one metal M is selected from the group consisting of Cu, Ni, Co, Ag and Pd. Platinum-alloy catalysts comprising these metals do have very high activities (especially for ORR) and/or high stability, for instance high stability during fuel cell operation. Preferably, the at least one metal M is copper (Cu), palladium (Pd) or silver (Ag). These platinum-alloys are more stable than other platinum-alloy catalysts if used at the cathode of a fuel cell.

More preferably, the at least one metal is copper (Cu). Platinum-copper-alloys are very active and stable catalysts.

The inventors of the present invention have observed, that the chemical activation of a platinum-alloy catalyst is very demanding, if the at least one metal, which is less noble than platinum, itself is comparatively noble. That is, metals such as Cu, Pd or Ag, which are less noble than platinum, but still have a high degree of nobility, are particularly hard to remove from the surface of the platinum-alloy catalyst. Without being bound to theory, this is attributed to the fact that noble metals are hard to dissolve. Moreover, if dissolved, they show a strong tendency to readsorb or redeposit at the surface of the platinum-alloy catalyst. In consequence, removing the Cu from a platinum-copper-alloy catalyst or removing Ag from a platinum-silver-alloy catalyst is very challenging. The same applies for removing Pd from a palladium-silver-alloy catalyst.

For these types of catalyst, the inventive method is the only method known so far, which allows to achieve nearly complete activation without subjecting the catalyst to an electrical treatment, such as potential cycling. Namely, for platinum-copper the experiments shown within this application are according to the best knowledge of the inventors the first experiments, wherein almost complete activation for the ORR has been achieved without utilizing potential cycling.

When discussing metal (re-)deposition, two types of deposition have to be taken into account: So called overpotential deposition (OPD) and underpotential deposition (UPD). UPD is usually covering the surface on which the deposition takes place of up to one monolayer. During OPD multilayer formation occurs. UPD of less noble metals on a platinum-alloy surface is taking place at potentials that are more positive compared to OPD of less noble metals on a platinum-alloy surface.

For the example of a platinum-copper-alloy the potentials for copper underpotential deposition (Cu_{UPD}) and copper overpotential deposition (Cu_{OPD}) are E_{CuUPD} = 0.6 V_{RHE} and E_{CuOPD} = 0.34 V_{RHE}. (V_{RHE} is the voltage given versus the so called Reversible Hydrogen Electrode). It is known that already very low concentrations (e.g. in the µg·mL⁻¹ range) of Cu adatoms do almost completely disable the operation of a PEMFC at the anode side. Similarly, without being bound by theory the mechanisms of the ORR at the cathode side may be affected. Namely, what is known as the ORR four-electron-pathway is believed to shift to what is known as the less efficient two-electron pathway till 0.7 V_{RHE}. Using highly advanced characterization tools, it has been demonstrated that underpotentially deposited copper (Cu_{UPD}) remains stable and blocks Pt active surface also above 0.8 V_{RHE}, i.e. at potentials relevant for PEMFC operation. Especially in the presence of O₂ (as the case during ORR), Cu has been shown to be stabilized as Cu(OH) up to potentials as high as 0.84 V_{RHE}. That is, in particular Cu_{UPD} is very hard to address in the course of chemical activation. Moreover, ORR-activity drops significantly, already if small amounts of Cu are present at the platinum-copper-alloy surface.

On the other hand - as suggested by the experiments presented in this application - adsorptive gases, such as CO, are capable of disturbing the formation of M_{UPD}, such as Cu_{UPD}.

Namely, Cu_{UPD} is much more effectively reduced by exposing platinum-copper-alloy catalysts not only to an acidic or basic medium, but in addition to an adsorptive gas, in particular CO. Without being bound by theory this may help to understand why the method of the present invention results in a surprisingly effective activation of platinum-alloy catalysts. Said effect is very strong for platinum-copper catalysts, which are characterized by strong Cu_{UPD}.

According to at least one embodiment the at least one metal M is copper (Cu) and one further metal selected from the group consisting of Ag, Pd, Ni, Co, Fe, Cr, Ti, Pb, Sn, Mo, Y and Gd, preferably Ag, Ni, Co and Pd.

According to at least one embodiment the platinum-alloy of the platinum-alloy catalyst consists of platinum and copper. According to at least one embodiment x is at least 0.01, preferably at least 0.1, more preferably at least 0.5, such as at least 1, at least 2 or at least 3.

According to at least one embodiment x is less than 5, preferably less than 4, for instance x is 3 or less than 3.

According to at least one embodiment x fulfills the following requirements: 0.01 ≤ x ≤ 5, preferably 0.1 ≤ x ≤ 4, such as 1 ≤ x ≤ 4 or 2.5 ≤ x ≤ 3.5. For instance x = 3.

If x is very small the ORR-activity is not much higher than compared to platinum only catalysts, as the catalyst almost exclusively comprises platinum and thus approaches the lower catalytic activity of platinum. However, if x is very high the catalyst is predominantly comprising less noble metals. At some point formation of a stable platinum overlayer may not be very effective anymore. In this case the stability of the catalyst e.g. under fuel cell operation is very low.

According to at least one embodiment the platinum-alloy of the platinum-alloy catalyst has the formula PtCu₃. This catalyst is characterized by very high ORR-activities, once it is activated. Moreover, after removal of Cu from the surface of the PtCu₃ the catalyst shows a significantly higher stability than most known platinum-alloy catalysts. For platinum-alloys such as PtCu₃, chemical activation is very hard to accomplish, as the catalyst comprises a high amount of copper, which has a high tendency towards Cu_{UPD}. Actually PtCu₃ alloys, in particular PtCu₃/C catalysts release a large amount of copper into the acidic or basic medium. Their activation is among the most difficult catalyst systems to activate. The method of the present invention is to the best knowledge of the inventors the first method, which is capable of complete activation of this system without applying potentiodynamic cycling.

According to at least one embodiment the platinum-alloy catalyst is a powder. Powders are easy to disperse in an acidic or basic medium. In this way an excellent distribution inside the medium can be achieved, which facilitates the activation process.

According to a preferred embodiment the platinum-alloy catalyst is a nanoparticulate platinum-alloy catalyst. Here and in the following this means that the platinum-alloy catalyst comprises platinum-alloy nanoparticles having an average particle diameter ranging from 1 nm to 1000 nm. Preferably, the platinum-alloy nanoparticles are supported on a support, such as a carbon support.

Preferably, the platinum-alloy nanoparticles have an average particle diameter ranging from 1 to 200 nm. If the particle size is very small the stability of the platinum-alloy catalyst under fuel cell operation is very low. Particles with a diameter below 1 nm are not very stable. If the particle size is very large, the platinum is utilized poorly and the mass activity is low.

According to at least one embodiment the platinum-alloy catalyst comprises platinum-alloy nanoparticles having an average particle diameter ranging from 1 to 20 nm. Preferably, the particle diameter is ranging from 2 to 7 nm, such as 3 to 5 nm. These catalysts have very high mass activities for the ORR due to the small particle size. For this type of platinum-alloy catalysts the treatment of the present invention results in platinum-alloy nanoparticles having a core-shell-structure with a platinum-alloy core and a platinum shell. The platinum-shell protects the less noble metal in the core from dissolution and thus results in a stabilization of the less noble metal.

According to at least one embodiment the platinum-alloy catalyst comprises platinum-alloy nanoparticles having an average particle diameter ranging from 20 to 200 nm. For instance, the average particle diameter is ranging from 50 to 200 nm, such as 50 to 150 nm. These types of catalysts are capable of forming pores during catalyst activation due to partial dealloying. After activation, they are very stable under fuel cell operation due to the large particle size.

The average particle diameter is determined by transmission electron microscopy (TEM) or scanning transmission electron microscopy (STEM). The particle diameter refers to a diameter, which corresponds to the diameter of a circle, which equivalents the area of the particle as measured via TEM or STEM. Average particle diameters are obtained based on evaluating the diameter for at least several hundreds of particles.

According to at least one embodiment the platinum-alloy catalyst is a so called nanostructured thin film catalyst (NSTF, as reported by 3M).

According to a preferred embodiment the platinum-alloy catalyst comprises a support, preferably a carbon support. Platinum-alloy catalysts are frequently made of platinum-alloy nanoparticles dispersed on a carbon support.

According to at least one embodiment the carbon support is selected from the group consisting of carbon blacks, such as Vulcan, Carbon nanotubes (CNTs), graphene, or other conductive carbon materials, as well as modifications thereof. However, also other supports different from carbon can be employed.

According to a preferred embodiment the platinum-alloy catalyst has the general formula

PtMₓ/C,

wherein M and x are defined as explained above with respect to the platinum-alloy PtMₓ. C stands for carbon, i.e. C stands for the carbon support, such as carbon black.

According to at least one embodiment the carbon support has a surface area of at least 10 m²/g, preferably at least 20 m²/g, more preferably at least 50 m²/g.

According to at least one embodiment the carbon support has a surface area of at most 3000 m²/g, preferably at most 1000 m²/g, more preferably at most 750 m²/g, such as at most 500 m²/g, at most 250 m²/g, at most 200 m²/g or at most 150 m²/g.

For instance, the carbon support has a surface area between 10 m²/g and 3000 m²/g, preferably between 10 m²/g and 1000 m²/g, more preferably between 20 and 500 m²/g, such as between 50 and 200 m²/g.

The surface can be determined via physisorption of N₂, with the so called BET-Method (Brunauer-Emmett-Teller-Method).

If the carbon support has a very high surface area, a very good distribution of the platinum-alloy on the support can be achieved. However, carbon supports with a smaller surface area are less prone to carbon corrosion as often observed during fuel cell operation. A carbon support having a surface area between 50 and 200 m²/g shows a good dispersion of the platinum-alloy nanoparticles on the carbon support and at the same time shows good stability against carbon corrosion under fuel cell operation.

Various supports can be applied. The inventors understand that the method of the present invention works well with platinum-alloy catalysts, with and without support. The method can also be applied to platinum-alloys, which are particles or aggregates of particles, which do not have a support. Furthermore the invention also works for platinum-alloy films. However, platinum-alloy nanoparticles supported on a carbon support are usually preferred for fuel cell applications.

According to a preferred embodiment of the inventive method the acidic medium comprises an acid having a pKₐ-value ranging from -1 to 10, preferably from 2 to 8, more preferably from 3.5 to 6, such as from 3.75 to 5.5, for instance from 4.5 to 5.0.

The inventors of the present invention have observed that in the case that the platinum-alloy catalyst is exposed not only to an acidic medium, but also to an adsorptive gas, such as CO, it is not necessary to use very strong acids having a pKₐ-value below -1. For instance, the activation of the platinum-alloy catalyst is also very effective if less aggressive acids are used. Namely, it is not necessary to use acids like HClO₄ (pKₐ = -10), H₂SO₄ (pKₐ = -3) or HNO₃ (pKₐ = -1.32). On the contrary, the inventors of the present invention have observed that the use of strong acids, having a very low pKₐ can result in degradation of the platinum-alloy catalyst. This means that also platinum may be dissolved and/or the less noble metal is not only removed from the surface of the platinum-alloy catalyst, but may also be removed from the interior of the catalyst. In consequence, the strain/ligand effect is reduced and the specific activity and consequently also the mass activity of the catalyst decreases. Therefore exposing the platinum-alloy catalyst to an acidic medium, comprising an acid with a pKₐ-value within the above mentioned ranges is preferred, as they enable a good activation in combination with the adsorptive gas without the risk of causing catalyst degradation. For instance, in combination with CO as adsorptive gas, acids with a very low pKₐ-value may cause catalyst degradation. However, also strong acids can be employed for the inventive treatment of the present invention. However, in this case care must be taken in order to avoid catalyst degradation (e.g. using shorter times of exposure, lower temperatures or less repetitions).

According to a preferred embodiment, the acidic medium comprises an acid, which is selected from the group consisting of carboxylic acids, in particular C₁-C₁₀ carboxylic acids. The carboxylic acid, can be a mono-acid having only one -COOH group, however also poly-acids having two or more -COOH groups can be used. For instance, the acidic medium is an aqueous solution comprising the carboxylic acids.

Preferably, the carboxylic acid is selected from the group consisting of formic acid, acetic acid, propionic acid, butyric acid, valeric acid and capronic acid. More preferably, the carboxylic acid is acetic acid (= HAc; pKₐ = 4.76). For instance, the acidic medium is an aqueous solution of acetic acid.

The inventors of the present invention have observed that carboxylic acids are very effective in removal of less noble metals from the platinum alloy catalyst. This is even the case for metals, such as copper, which are in particular hard to remove. Without being bound by theory carboxylic acids, such as HAc, are believed to coordinate to the dissolved less noble metal and thus stabilize ionic species of the less noble metal in the acidic medium. Moreover, in contrast to other more aggressive acids, such as HClO₄, H₂SO₄ or HNO₃, they are milder and thus tend to dissolve less platinum. In addition, they tend to dissolve not so much of the less noble metal from the interior of the platinum-alloy.

According to at least one embodiment, the basic medium comprises a base having a pK_{b}-value ranging from 0 to 8, preferably ranging from 2 to 6, such as 4 to 5.

Said pK_{b}-values allow efficient removal of the less noble metal and at the same time are not too aggressive and thus do not cause catalyst degradation. Again also other bases may be used if care is taken in order to avoid catalyst degradation.

According to at least one embodiment, the basic medium comprises a base having the general formula NR¹R²R³, wherein R¹, R² and R³ are each independently from one another selected from the group consisting of H, Methyl, Ethyl, Propyl, Isopropyl, Butyl, Pentyl and Hexyl.

According to a preferred embodiment, the basic medium comprises ammonia (NH₃; pK_{b} = 4.75). For instance, the basic medium is an aqueous solution of ammonia.

Amines, such as NR¹R²R³ in general and ammonia specifically, have a good ability to coordinate to the less noble metal atoms of the platinum-alloy catalyst. This effect is very strong e.g. for copper. The base thus facilitates dissolution of the less noble metal. Experiments performed by the inventors have shown that with ammonia similar activation can be achieved as demonstrated in the experiments shown for HAc.

According to at least one embodiment the acidic medium or the basic medium comprises a solvent. Preferably, the solvent is water, in particular demineralized or deionized water (e.g. Mili-Q water). By using demineralized or deionized water it is ensured that no further impurities are inserted, which may adsorb to the surface of the catalyst.

According to at least one embodiment the acidic medium comprises an acid having a concentration in the acidic medium ranging from 0.1 M (M = Molar) to concentrated acid, preferably from 0.1 M to 2.5 M, more preferably from 0.5 M to 2.0 M, such as 0.8 M to 1.5 M, e.g. 1 M. For instance, the acidic medium is an aqueous solution comprising an acid in the given concentration ranges.

According to at least one embodiment the basic medium comprises a base having a concentration in the basic medium ranging from 0.1 M (M = Molar) to concentrated base, preferably from 0.1 M to 2.5 M, more preferably from 0.5 M to 2.0 M, such as 0.8 M to 1.5 M, e.g. 1 M. For instance, the basic medium is an aqueous solution comprising a base in the given ranges.

If the concentration of the acid/base is too low the dissolution of the less noble metal and/or other impurities is less effective. If the concentration is too high, the subsequent neutralization requires more solvent and the acidic or basic medium becomes more aggressive.

According to at least one embodiment the acidic or basic medium is a fresh acidic or basic medium. That is the acidic or basic medium has not been used before or has been regenerated. In case that step B) is repeated several times it is preferred that during each repetition a fresh acidic or basic medium is used. The experiments of the inventors have demonstrated that in this way the less noble metals can be removed more completely from the platinum-alloy surface, and thus a more complete activation is achieved.

According to at least one embodiment the acidic or basic medium is free of impurities of metal ions. Free of impurities of metal ions means that the content of metal ions in the acidic or basic medium is less than 1000 ppm, preferably less than 100 ppm, for instance less than 10 ppm.

According to a preferred embodiment the ratio of mass of platinum-alloy catalyst to the volume of the acidic or basic medium is at least 0.01 g_{catalyst}/L_{acidic medium}, preferably at least 0.1 g_{catalyst}/L_{acidic} medium, more preferably at least 1 g_{catalyst}/L_{acidic} medium. If the ratio of mass of platinum-alloy catalyst to the volume of the acidic or basic medium is very low, the acid or base is not utilized very efficiently.

According to a preferred embodiment the ratio of mass of platinum-alloy catalyst to the volume of the acidic or basic medium is at most 250 g_{catalyst}/L_{acidic} medium, preferably at most 100 g_{catalyst}/L_{acidic} medium, more preferably at most 20 g_{catalyst}/L_{acidic} medium, for instance at most 10 g_{catalyst}/L_{acidic} medium or at most 5 g_{catalyst}/L_{acidic} medium. If the ratio of mass of platinum-alloy catalyst to the volume of the acidic or basic medium is very high, the concentration of the dissolved impurities and less noble metals will be very high in the medium and thus the activation of the platinum alloy catalyst is less efficient.

According to at least one embodiment the ratio of mass of platinum-alloy catalyst to the volume of the acidic or basic medium is ranging from 0.01 g_{catalyst}/L_{acidic} medium to 250 g_{catalyst}/L_{acidic} medium, preferably from 0.1 g_{catalyst}/L_{acidic} medium to 100 g_{catalyst}/L_{acidic} medium, for instance from 1 g_{catalyst}/L_{acidic} medium to 5 g_{catalyst}/L_{acidic} medium.

According to a preferred embodiment, step A) and step B) of the method are performed without subjecting the catalyst to an external electrical current or voltage.

According to a more preferred embodiment, the method is performed without subjecting the catalyst to an external electrical current or voltage. This means that the method is completely free of any steps, wherein the catalyst is subjected to an external electrical current or voltage. This means that the method is a method of chemical activation.

As explained already above, the inventive method does not require subjecting the catalyst to an external current or voltage in order to perform catalyst activation, which takes place in particular during step B). Moreover, while it is possible to perform additional electrochemical activation steps in the course of the method of the present invention, this is in contrast to known methods of chemical activation not necessary in order to obtain sufficient activation. Therefore, the complete method can be free of any steps of subjecting the catalyst to an external electrical current or voltage from an external electrical power source. The method is thus easy to scale up as no electrical contact of the catalyst and an external electrical power source needs to be established.

According to at least one embodiment the method of the present invention is performed without exposing the catalyst to ozone (O₃). According to at least one embodiment the method of the present invention is performed without utilizing an ozoniser. Some methods for chemical activation utilize ozone. However, generating ozone is expensive. Moreover, ozone is aggressive and can lead to catalyst degradation.

According to a preferred embodiment step B) is performed at a temperature of less than 75°C, preferably less than 50°C, more preferably less than 35°C, for instance less than 30°C, such as room temperature or 5°C.

According to a preferred embodiment step B) is performed at a temperature of more than 0°C and less than 50°C, preferably more than 0°C and less than 35°C, for instance at least 4°C and at most 30°C, such as room temperature.
Most known methods of chemical activation of platinum-alloy catalysts require high temperatures during treatment with an acid in order to achieve a certain activation of the catalyst for the ORR. In contrast to this, the inventors of the present invention have observed that in case of the additional exposure to an adsorptive gas, such as CO, no high temperatures are required in order to achieve high ORR-activities. On the contrary, high temperatures may reduce solubility of the adsorptive gas in the acidic or basic medium. Therefore, in many cases it is preferable to avoid high temperatures during step B) in order to ensure that the platinum-alloy catalyst is exposed to both high amounts of the acidic or basic medium and the adsorptive gas. For instance, CO has the highest solubility in water at about 5°C. Moreover, performing step B) at high temperatures requires additional energy and thus is less environmentally friendly and more expensive. However, if the temperatures are too low, the reaction of dissolution (i.e. oxidation of the metallic less noble metal to ions of the less noble metal) and the process of desorption (which is an endothermic process) of the less noble metal may become very slow. Therefore, step B) is preferably performed in the above mentioned temperature ranges.

According to at least one embodiment step B) of the present invention is performed at a pressure of 1 atm. However, the present invention can also be performed at pressures above 1 atm. With pressures above 1 atm it is possible to increase the amount of the adsorptive gas during step B), e.g. the amount of adsorptive gas dissolved in the acidic or basic medium.

According to at least one embodiment step B) of the present invention is performed at in a pressure range between 1 bar and 200 bar. For instance, step B) is performed at a pressure between 1 bar and 10 bar or between 10 bar and 200 bar. High pressures are beneficial in order to ensure the presence of a high amount of adsorptive gas during step B). However, if the pressure is low the method can be performed without expensive high pressure facilities.

According to at least one embodiment exposing the catalyst to an acidic or basic medium, and exposing the catalyst to an adsorptive gas of step B) is performed by dispersing the catalyst in the acidic or basic medium, wherein the adsorptive gas is at least partially dissolved in the acidic or basic medium.

According to at least one embodiment exposing the catalyst to an acidic or basic medium and exposing the catalyst to an adsorptive gas means mixing of the platinum-alloy catalyst, the adsorptive gas and the acidic or basic medium.

According to at least one embodiment step B) comprises mixing and/or dispersing the platinum-alloy catalyst, the adsorptive gas and the acidic or basic medium.

According to at least one embodiment step B) comprises dispersing the platinum-alloy catalyst in the acidic or basic medium using an ultrasonic bath.

According to at least one embodiment mixing and/or dispersing is performed utilizing a stirrer. For instance, the stirrer is a magnetic stirrer, a pitched blade turbine stirrer, a propeller stirrer, a rusthon turbine stirrer. However, also other types of stirrer may be employed. The speed of the stirrer may be varied. For instance, the stirrer is used within a range from 5 rpm to 1000 rpm (rpm = rotations per minute), such as from 10 rpm to 250 rpm.

According to at least one embodiment step B) is performed for less than 10 hours, preferably less than 5 hours, more preferably less than 2 hours, for instance less than 1 hour or even less than 40 minutes, e.g. equal to or less than 30 minutes.

According to at least one embodiment step B) is performed for more than 1 minute, preferably more than 5 minutes, for instance more than 10 minutes.

In contrast to standard methods for chemical activation, the method according to the present invention is less time demanding. In particular step B) which is the crucial step for catalyst activation can be performed in a comparatively short period of time. This is even true for platinum-copper-alloy catalysts, which commonly require much longer times of activation, often one day or longer.

According to at least one embodiment the method of the present invention is further comprising:
C) separating the catalyst from the acidic or basic medium.

Step C) takes place after step B).

According to at least one embodiment separating the catalyst from the acidic or basic medium of step C) is performed via filtration, sedimentation or centrifugation. Preferably, step C) is performed via filtration.

Step B) and C) together may be referred to as acid washing or base washing.

According to at least one embodiment step B) and step C) are repeated at least once, preferably repeated at least two times, more preferably at least three times. Each repetition is performed with a fresh acidic or basic medium or with a regenerated acidic or basic medium. Preferably, each repetition is performed with fresh adsorptive gas or with regenerated/recycled adsorptive gas.

According to at least one embodiment step B) and step C) are repeated not more than 10 times, preferably not more than 5 times.

For instance, at least two and at most four repetitions are performed, for instance exactly three repetitions are performed.

The inventors of the present invention have observed that more repetitions of steps B) and C), result in a more effective removal of the less noble metal. The number of repetitions has a stronger impact on the effectivity of catalyst activation than the time of exposure. Therefore, more repetitions result in a better activation. However, a large number of repetitions increases the effort associated with the method.

Preferably, at least two and at most four repetitions are performed, for instance three repetitions are performed.

When step B) is repeated, for each repetition a fresh acidic or basic medium is used. That is the catalyst is exposed to an acidic or basic medium, which is free of impurities.

For this purpose either a new acidic or basic medium can be used or the acidic or basic medium of a previous step B) is regenerated, wherein impurities are removed from the medium prior to using it for the next performance of step B). According to at least one embodiment the acidic or basic medium of step B) is regenerated. For instance, regenerating is performed in an acid/base regeneration module using electrolytic principle. In this way waste of acid and/or base can be reduced drastically.

According to at least one embodiment the adsorptive gas of step B) is regenerated/recycled. For instance, the adsorptive gas may be separated from the acidic or basic medium after step B) for instance using a gas-liquid-separator. Moreover, the adsorptive gas may be subjected to further purification. The adsorptive gas may be used again in step B). For this purpose the adsorptive gas can be compressed, e.g. using a compressor.

According to at least one embodiment the method of the present invention is further comprising:
D) washing the catalyst with a solvent, preferably with demineralized water.

Step D) is performed after step C).

Step D) aids in neutralizing the remaining acid or base and further aids in removing less noble metals, which are present in small amounts in the remaining acidic or basic medium, which may not have been completely removed from the catalyst during step C).

According to at least one embodiment step D) is performed at temperatures between 50°C and 100°C, preferably between 75°C and 100°C, such as 100°C. For instance, step D) is performed in boiling water. Using elevated temperatures facilitates the removal of remanent impurities as desorption is an endothermic process, which is facilitated by heat.

According to at least one embodiment the solvent of step D) is ethanol or water. Preferably step D) is performed using demineralized or deionized water (e.g. Mili-Q water) as solvent. The water can be distilled water.

According to at least one embodiment the platinum-alloy catalyst is dispersed and/or mixed with the solvent during step D). For instance dispersing and/or mixing is performed via ultrasonication and/or via stirring. For instance, the same types of stirrers, as described for step B) may be employed.

According to at least one embodiment the method of the present invention is further comprising:
E) separating the catalyst from the solvent.

Step E) is performed after step D).

According to at least one embodiment separating the catalyst from the solvent of step D) is performed via filtration, sedimentation or centrifugation. Preferably, step E) is performed via filtration.

Step D) and E) together may be referred to as solvent washing, in case water is used as water washing.

According to at least one embodiment step D) and step E) are repeated at least once, preferably repeated at least two times, more preferably at least three times.

According to at least one embodiment step D) and step E) are repeated not more than 10 times, preferably not more than 5 times.

For instance, at least two and at most four repetitions are performed, for instance three repetitions are performed.

According to at least one embodiment the method of the present invention is further comprising:
F) drying the catalyst.

Step F) is performed after step B), preferably after step E).

According to at least one embodiment step F) is performed at a temperature between 30°C and 250°C, preferably at 40°C to 150°C, for instance at 40°C to 75°C.

According to at least one embodiment step F) is performed for at least 1 hour and less than 20 hours, such as at least 2 hours and less than 12 hours.

According to at least one embodiment step B) is performed in a reactor. Preferably the reactor is not an electrochemical reactor. That is preferably the reactor is not an electrochemical cell. In particular the reactor is not a fuel cell.

According to at least one embodiment step B) is performed in a batch reactor or a flow/continuous reactor.

In the case a batch reactor is used the acidic or basic medium can be exchanged and steps B) and C) can be repeated several times. If a batch reactor is used usually in total less amount of the acidic or basic medium is required. That is less acid or base and optionally also less solvent is required compared to a flow/continuous reactor, wherein continuously fresh acidic or basic medium is fed to the reactor. Thus waste can be reduced, when using a batch reactor.

However, preferably step B) is performed in a flow/continuous reactor. In a continuous reactor the platinum-alloy catalyst is always exposed to fresh acidic or fresh basic medium and fresh adsorptive gas (such as fresh CO), which are continuously fed to the reactor. In this way the equilibrium between dissolved less noble metal in the medium and redeposited less noble metal is shifted in such a way that further dissolution or desorption of the less noble metal from the catalyst surface is enhanced. Thus the less noble metal is continuously removed from the platinum-alloy catalyst surface and subsurface layers. In this way an even more effective activation of the platinum-alloy catalyst is possible. In this way a degree of activation can be achieved, which so far was not possible with standard chemical activation.

In the end using a continuous reactor can be compared to using a batch reactor, wherein steps B) and C) are repeated multiple times or ideally infinitely. Both using more repetitions or using a continuous reactor results in repeatedly or continuously exposing the platinum-alloy catalyst with fresh acidic or fresh basic medium and adsorptive gas. This results in a more efficient removal of the less noble metal from the surface of the platinum-alloy catalyst.

According to at least one embodiment step B) is performed in a reactor, preferably a reactor selected from the group consisting of fixed bed reactor (FBR), mechanically stirred reactor (MSR) and draft tube reactor (DTR).

According to at least one embodiment step B) is performed in a fixed bed reactor (FBR). In a fixed bed reactor (FBR) the platinum-alloy catalyst is retained in the reactor in a fixed bed or a packed bed. Typically the platinum-alloy catalyst is a powder having particles, which are stationary in the FBR and form a bed of particles. The acidic or basic medium and the adsorptive gas flows through the fixed bed and thus the catalyst is exposed thereto.

According to at least one embodiment the FBR is operated in a three phase mode (i.e. a trickle bed regime) or a two phase mode. In the three phase mode solid catalyst, liquid acidic or basic medium and gaseous adsorptive gas are present in the reactor. In the two phase mode solid catalyst is present, while only one further either gaseous or liquid phase is present, that is the adsorptive gas and the acidic or basic medium are present in the same phase. For instance, the acidic or basic medium is liquid and the adsorptive gas is dissolved in the liquid.

Operation in two phase mode is simpler to achieve with respect to flow distribution inside the particle bed, but it may requires higher pressures to dissolve the adsorptive gas in the liquid acidic or basic medium.

Preferably the acidic or basic medium is distributed in the FBR using a liquid distributor. In this way uniform liquid distribution across the cross section of the particles can be achieved in the fixed bed.

Preferably exposing the catalyst to the adsorptive gas is facilitated by static mixers, packed columns or (sufficiently long) pipes.

According to at least one embodiment step C) is performed via filtration, wherein the means for filtering are incorporated in the reactor (e.g. at the bottom of the reactor) retaining the platinum-alloy catalyst in the reactor, while the acidic or basic medium and the adsorptive gas are removed from the reactor.

According to at least one embodiment step D) and E) are also performed in the reactor, using the means for filtering for separating the solvent from the catalyst.

According to at least one embodiment the reactor is purged with an inert gas after step E). In this way remaining adsorptive gas can be removed from the reactor. For instance, the inert gas is N₂ or Ar.

In particular, the last three embodiments are not restricted to FBR reactors, but can also be employed for other types of reactors.

According to at least one embodiment step B) is performed in a mechanically stirred reactor (MSR). For instance, stirrers as mentioned above in context with step B) can be applied. In general stirrers are preferred with a high capability of bringing or maintaining platinum-alloy catalyst particles in suspension. The MSR reactor can be used in batch mode or continuous mode.

According to at least one embodiment in step B) particles of the platinum-alloy catalyst are suspended in the acidic or basic medium.

According to at least one embodiment in step B) the adsorptive gas and the acidic or basic medium are mixed such that bubbles of the adsorptive gas are formed in the acidic or basic medium. In this way a large surface area of the adsorptive gas within the medium is achieved and thus the catalyst can effectively be exposed to both the adsorptive gas and the acidic or basic medium.

Both embodiments can be easily achieved using a MSR-reactor, but are not limited thereto.

According to at least one embodiment step B) is performed in a draft tube reactor (DTR). DTR reactors can be operated in batch mode and in continuous mode.

A DTR reactor comprises tubes in which step B) can take place. Namely, a DTR reactor creates a stream of finely dispersed bubbles of adsorptive gas in said tubes.

DTR reactors are very suitable for large scale production of activated platinum-alloy catalyst and high degrees of activation.

According to at least one embodiment the acidic or basic medium and/or the adsorptive gas are subjected to a regeneration after step B) and used again. The regenerated acidic or basic medium either is used for the treatment of new platinum-alloy catalyst. Preferably, the regenerated acidic or basic medium is used (when step B) is repeated) for the same platinum-alloy catalyst.

The present invention further relates to a device for carrying out the method of treating the platinum-alloy catalyst.

The method of the present invention can be performed by the device for carrying out the method. Therefore, embodiments and features described in connection with the method do also apply for the device and vice versa.

The invention according to the second aspect refers to a device for carrying out the method according to the first aspect of the present invention, comprising:
- a source of an adsorptive gas,
- a source of an acidic or basic medium,
- a reactor for exposing a platinum-alloy catalyst with the acidic or basic medium and exposing the platinum-alloy catalyst with the adsorptive gas, wherein the reactor is comprising:
   -- at least one inlet and
   -- at least one outlet
   wherein the source of the adsorptive gas is in fluid connection with the at least one inlet, and the source of the acidic or basic medium is in fluid connection with the at least one inlet,
- at least one separator for separating the platinum-alloy catalyst from the acidic or basic medium.

According to at least one embodiment the source of the adsorptive gas is a source of CO. Preferably, the term source refers a gas bottle/gas cylinder or any other type of gas container comprising the adsorptive gas. Alternatively, the term source refers to a pipeline providing a feed of the adsorptive gas. The source of adsorptive gas is in fluid connection with the at least one inlet of the reactor. For instance, the fluid connection is established by a pipe.

According to at least one embodiment the source of an acidic or basic medium is a container comprising the acidic or basic medium or a pipeline providing a feed of the acidic or basic medium. The source is in fluid connection with the at least one inlet of the reactor. For instance, the fluid connection is established by a pipe.

According to at least one embodiment the inventive device further comprises a pump in fluid connection with the source of the acidic or basic medium and the at least one inlet of the reactor.

According to at least one embodiment the reactor comprises a first inlet and a second inlet, wherein the source of the adsorptive gas is in fluid connection with the first inlet and the source of an acidic or basic medium is in fluid connection with the second inlet.

According to at least one embodiment the inventive device further comprises a source of a solvent, such as a source of water. According to at least one embodiment the source of the solvent is a container comprising the solvent or a pipeline providing a feed of the solvent. The source is in fluid connection with the at least one inlet of the reactor. For instance, the fluid connection is established by a pipe.

According to at least one embodiment the inventive device further comprises a pump in fluid connection with the source of the solvent and the at least one inlet of the reactor.

According to at least one embodiment the reactor comprises a first inlet, a second inlet and a third, wherein the source of the adsorptive gas is in fluid connection with the first inlet and the source of an acidic or basic medium is in fluid connection with the second inlet and the source of the solvent is in fluid connection with the third inlet.

According to at least one embodiment of the inventive device, the reactor is a batch reactor or a continuous reactor. Preferably the reactor is a continuous reactor. As described above, a continuous reactor allows to expose the platinum-alloy catalyst always to a fresh acidic or basic medium and a fresh adsorptive gas. The inventors of the present invention have understood that by using a continuous reactor a further improvement of the removal of the less noble metal from the surface of the platinum-alloy catalyst can be achieved, resulting in a more complete and efficient activation of the platinum-alloy catalyst.

According to at least one embodiment of the inventive device, the reactor is a reactor selected from the group consisting of FBR, MSR and DTR, as explained above. The advantages of the individual types of reactors will be discussed in more detail in the Figures.

According to at least one embodiment the reactor comprises a stirrer. The stirrer is at least one of the types of stirrers described above in context with the inventive method.

According to at least one embodiment the reactor is a FBR and comprises a fixed bed of particles of the platinum-alloy catalyst. The reactor may comprise means for inserting the catalyst prior to carrying out the method.

According to at least one embodiment the reactor comprises a suspension of the acidic or basic medium and the platinum-alloy catalyst.

According to at least one embodiment the inventive device comprises a suspension preparation tank for preparing a suspension of the platinum-alloy catalyst, for instance a suspension of the platinum-alloy catalyst with a solvent, such as water. Preferably the suspension preparation tank, is in fluid connection with the at least one inlet of the reactor.

According to at least one embodiment the inventive device further comprises a pump in fluid connection with the suspension preparation tank and the at least one inlet of the reactor.

According to at least one embodiment the reactor comprises a liquid distributor for distributing the acidic or basic medium. By using a liquid distributor contacting of the surface of the catalyst with the acidic or basic medium, which preferably is a liquid medium, is further improved.

According to at least one embodiment the reactor comprises a gas sparger, for generating fine gas bubbles of the adsorptive gas. In this way fine gas bubbles of the adsorptive gas can be achieved and thus exposure of the catalyst to the adsorptive gas is facilitated.

According to at least one embodiment the reactor is a DTR comprising a tube and a gas sparger.

According to at least one embodiment of the device, the at least one separator for separating the platinum-alloy catalyst from the acidic or basic medium is located in the reactor. The separator allows to separate the acidic or basic medium from the catalyst during "acid/base washing" but also can be used to separate the catalyst from the solvent (e.g. water) during "solvent/water washing".

According to at least one embodiment the at least one separator for separating the platinum-alloy catalyst from the acidic or basic medium is a filter. The filter can be a porous member for separating the platinum-alloy particles of the fixed bed of a FBR from the acidic or basic medium, or for separating platinum-alloy catalyst present in a suspension (e.g. in a MSR or DTR).

According to at least one embodiment the device comprises at least one further separator. Preferably the at least one further separator is also located in the reactor. According to at least one embodiment the reactor comprises at least two filters.

According to at least one embodiment the device comprises at least one further separator, wherein the at least one further separator is located outside the reactor.

According to at least one embodiment the at least one further separator is a liquid-gas-separator for separating the acidic or basic medium from the adsorptive gas.

According to at least one embodiment the inventive device, is comprising means for regeneration of the acidic or basic medium, said means being in fluid connection with both the at least one outlet of the reactor and the source of the acidic or basic medium. By using means for regeneration of the acidic or basic medium, the acid and base can be recycled and waste reduced.

In the context of the present invention regeneration preferably refers to purification. Namely, the acidic or basic medium is purified by the means for regeneration. For instance, impurities such as metallic ions of the less noble metal are removed from the acidic or basic medium during regeneration.

According to at least one embodiment the inventive device, is comprising means for regeneration/recycling of the adsorptive gas, said means being in fluid connection with both the at least one outlet of the reactor and the at least one inlet of the reactor. By using means for regeneration/recycling of the adsorptive gas again the overall waste of the process can be reduced.

In the context of the present invention recycling is not the same as regeneration. During recycling of the adsorptive gas the gas is not chemically changed, but it is returned to the reactor. Regeneration of the adsorptive gas means that the adsorptive gas is purified.

According to a preferred embodiment the inventive device comprises means for recycling of the adsorptive gas.

According to at least one embodiment the means for recycling of the adsorptive gas comprise a compressor. In this way the gas pressure can be adjusted. For instance, the compressor is in fluid connection with the at least one outlet of the reactor and the at least one inlet of the reactor.

According to at least one embodiment the inventive device comprises a container for waste gas. For instance, the container for waste gas is in fluid connection with the at least one outlet of the reactor and/or in fluid connection with the means for regeneration/recycling of the adsorptive gas.

According to at least one embodiment the inventive device comprises a container for waste liquid. For instance, the container for waste liquid is in fluid connection with the at least one outlet of the reactor and/or in fluid connection with the means for regeneration of the acidic or basic medium.

The method according to the first aspect of the invention and the device for carrying out the method according to the second aspect of the invention are explained in greater detail below with reference to exemplary embodiments and the associated figures, in which:
- Figure 1: shows STEM images of an as prepared PtCu₃/C catalyst.
- Figures 2a: to 2d show a typical method of electrochemical activation of an as prepared PtCu₃/C catalyst via cyclic voltammetry and measurements of its ORR-activity and ESA after complete activation.
- Figures 3a: and 3b show measurements of an as prepared PtCu₃/C catalyst in an electrochemical flow cell, monitoring Cu- and Pt-dissolution via ICP-MS during electrochemical activation.
- Figures 4a: to 4h show TEM-EDX images and compare the chemical composition of a PtCu₃/C catalyst as prepared and after electrochemical activation.
- Figure 5: compares the chemical composition obtained from EDX of a PtCu₃/C catalyst, as prepared (a), and after exposure to acetic acid for varying amounts of time (b) - (d), after acetic acid exchange (e) and after additional electrochemical activation (f), wherein TEM-EDX was performed on 4 catalyst areas as large as shown in (g).
- Figure 6: shows X-ray diffraction spectra of a PtCu₃/C catalyst, as prepared (a), and after exposure to acetic acid for varying amounts of time (b)-(d), and after additional acetic acid exchange (e).
- Figure 7: shows ORR polarization curves for ORR-activity determination of a a PtCu₃/C catalyst recorded after exposure to acetic acid for 2h (a), 4h (b), 6h (c) and after 6h and additional acid exchange (d) .
- Figure 8: shows CO electrooxidation measurements for ESA determination of a PtCu₃/C catalyst recorded after exposure to acetic acid for 2h (a), 4h (b), 6h (c) and after 6h and additional acid exchange (d) .
- Figure 9: shows ORR polarization curves (a), Tafel plots (b), CO electrooxidation experiments with follow-up cycles (c) and obtained ESA_{CO} (d), specific activity (e), mass activity (f) of PtCu₃/C catalysts that were subjected to ex-situ chemical activation (i) - (iii) and after ORR and CO measurement of ex-situ chemical activation (iii), the film was further subjected to 50 cycles of in-situ EA and ORR and CO were measured again (iv) (i = Reference Example 2; ii = Reference Example 1; iii = Example 1).
- Figure 10: shows a comparison of CO-electrooxidation experiments and ORR polarization curves between treatment in 1 M HAc saturated with CO (Fig. 10a and 10b; Example 1) and treatment in 1 M HClO₄ (Fig. 10c and 10d; Example 2).
- Figure 11: shows Table 1, comparing the effect of using HClO₄ instead of HAc as acidic medium for catalyst treatment.
- Figure 12: shows a device for treating a platinum-alloy catalyst according to the present invention, wherein for a batch reactor is used, namely a fixed bed reactor (FBR) is employed.
- Figure 13: shows a device for treating a platinum-alloy catalyst according to the present invention, wherein a mechanically stirred reactor (MSR) is employed either in batch mode or in continuous mode.
- Figure 14: shows a device for treating a platinum-alloy catalyst according to the present invention, wherein a draft tube reactor (DTR) is employed either in batch mode or in continuous mode.

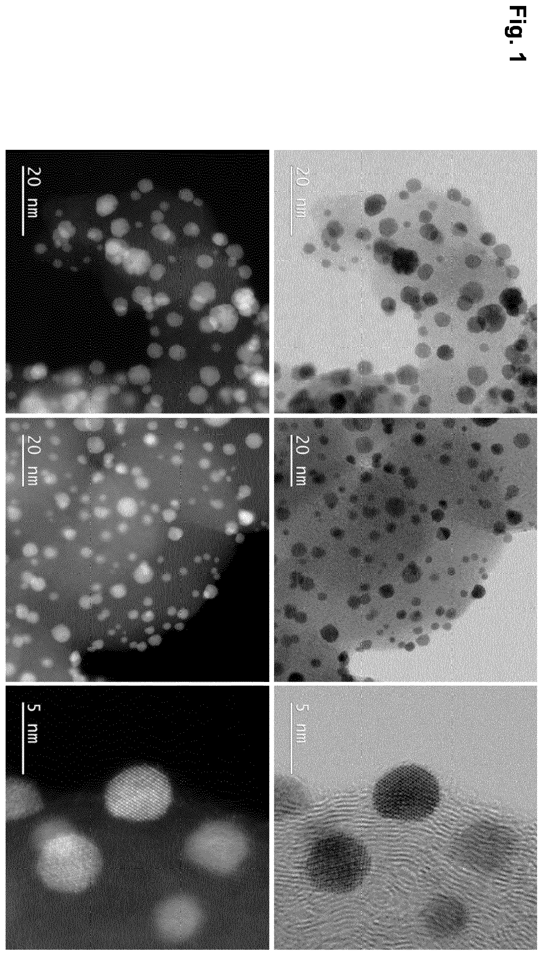

**Figure 1** shows scanning transmission electron microscopy images of a PtCu₃/C catalyst after synthesis. The catalyst comprises PtCu₃ nanoparticles supported on a carbon support. Details about the synthesis of this specific catalyst have been published previously (e.g. US 9,147,885 B2). The catalyst is characterized by a homogenous particle size, the average particle diameter being approximately 4 nm. The PtCu₃/C catalyst is a catalyst, which is particularly hard to activate without employing electrochemical activation. The reason for this is the high content and comparatively high nobility of copper, compared to other platinum-alloy-catalysts. Therefore, the PtCu₃/C catalyst is a perfect model system to study efficient methods of treatment for catalyst activation. Thus for the experiments explained in the following the PtCu₃/C catalyst was employed as a model system illustrating the effects of the present invention.

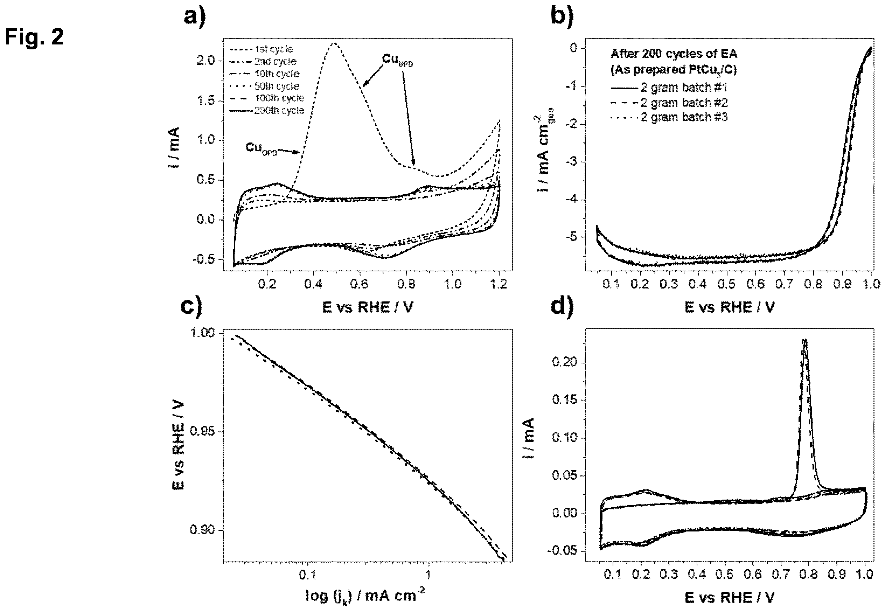

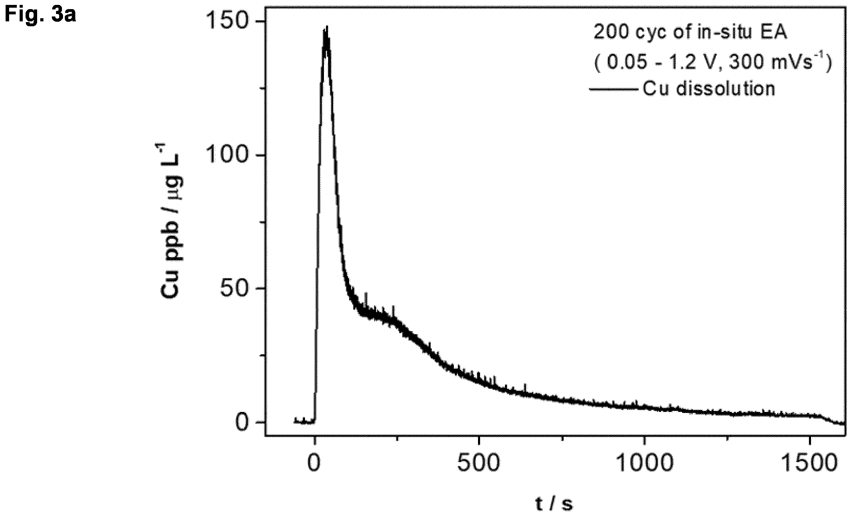

**Figure 2a** shows a standard method of electrochemical activation (in-situ EA) of the as synthesized PtCu₃/C catalyst via cyclic voltammetry. The measurements are carried out in a laboratory cell setup, namely in a three electrode half-cell configuration as explained above. A thin film of the PtCu₃/C electrocatalyst was deposited on a working electrode. As a working electrode a RDE was used. The electrochemical activation was performed via subjecting the electrocatalyst to cyclic voltammetry, i.e. an external potential was subjected to the catalyst and varied within a potential window ranging between 0.05 V_{RHE} and 1.2 V_{RHE}. The measurements were performed in 0.1 M HClO₄ (Merck, Suprapur), which was saturated with Argon. In total 200 potential cycles between 0.05 V_{RHE} and 1.2 V_{RHE} were performed (scan rate 300 mV·s⁻¹). Selected cyclic voltammograms (CV) are shown after the 1^{st}, 2^{nd}, 10^{th}, 50^{th}, 100^{th} and 200^{th} potential cycle. From the CVs it can be seen how the surface properties of the PtCu₃/C catalyst change in the course of the electrochemical activation procedure. Namely, in the 1^{st} CV the typical features of Cu can be observed (Cu_{OPD} and Cu_{UPD}-peaks), while none of the typical features for Pt can be seen. This shows that initially the surface of the platinum-alloy catalyst is almost completely covered with Cu. However, significant amounts of Cu are leached from the catalyst surface already during the first potential cycles. Namely, the vast majority of unstable Cu is removed from the surface and near surface area of electrocatalyst nanoparticles already after the 1^{st} cycle of *in-situ* EA. In addition to the removal of elemental Cu multilayers that correspond to Cu_{OPD}, one can also notice two additional peaks that correspond to Cu_{UPD} removal (see labels denoting both types of deposited copper in Fig. 2a). From the 1^{st} to about 50^{th} potential cycle of *in-situ* EA, the typical Pt CV features (hydrogen under potential deposition - H_{UPD} region between 0.05 V_{RHE} and about 0.35 V_{RHE}, as well as the reduction of Pt hydroxide/oxide between 0.85 to 0.55 V_{RHE}) are poorly resolved due to trace leftover amounts of Cu, as well as constant leaking of remaining unstable Cu from the subsurface layers of the platinum-alloy catalyst with each consecutive potential cycle. Those species constantly block the Pt surface as Cu_{OPD} and Cu_{UPD}. Upon removal of those trace amounts, a gradual evolution of the expected Pt peaks takes place so that after about 50 potential cycles, relatively stable CVs with fully developed Pt features are recorded. Nevertheless, upon tracking the Cu dissolution during the entire 200 cycles of electrochemical activation (Fig. 3a), it can be noticed that while indeed Cu dissolution already starts to limit towards 0 after 50 cycles (between 0 - 383.33 seconds), a substantial amount of Cu gets removed between 50^{th} and 200^{th} potential cycle (between 383.33 - 1533.33 s). Thus, activation of a platinum-alloy catalyst is an interplay between the removal of unstable subsurface less noble metal (M) and removal of the subsequential OPD and UPD species of M on Pt. Only once the leaking of the less noble metal goes below a critical level and the subsequent OPD and UPD species of the less noble metal M on Pt block an insignificant portion of Pt surface, high and reproducible activities can be achieved (Fig 2b and 2c).

**Figure 2b** shows ORR polarization curves measured of three different batches of PtCu₃/C catalyst. Three 2g batches of PtCu₃/C catalyst were prepared (For the electrochemical measurements however, only a few micrograms of the platinum-catalyst are utilized). The ORR polarization curves are measured after electrochemical activation via 200 potential cycles (performed at 600 rpm; rpm = rotations per minute). The electrolyte was exchanged prior to recording the ORR polarization curves. The ORR polarization curves were recorded at 1600 rpm. The so called kinetic-region (i.e. the potential range between 0.85 V_{RHE} to 0.95 V_{RHE} of the ORR polarization curves) can be used to determine the catalytic activity of the platinum-alloy catalyst for the ORR.

**Figure 2c** shows the corresponding Tafel plots obtained from the ORR polarization curves of Figure 2b. From the Tafel plot the specific activity can be directly derived for a given potential. In most cases ORR-activities are compared at a potential of 0.9 V_{RHE}.

**Figure 2d** shows CO-electrooxidation experiments for each of the three investigated batches of PtCu₃/C catalyst. CO-electrooxidation experiments are used to determine the catalytically active platinum surface area of a platinum-alloy catalyst. For this purpose the platinum-alloy catalyst is subjected to a constant potential, such as 0.05 V_{RHE}. Under these potential hold conditions subjected to the catalyst via the potentiostat a monolayer of CO is adsorbed to the catalyst surface. Thereafter, a potential cycle is performed in order to electrochemically oxidise CO to CO₂. This results in a CO-electrooxidation peak at about 0.8 V_{RHE}.

Based on the charge required for CO-electrooxidation the ESA can be calculated.

As can be seen from Figures 2b-2d the ORR-curves, Tafel plots and CO-electrooxidation experiments indicate excellent reproducibility and thus homogeneity of the PtCu₃/C catalyst.

**Figure 3a** shows measurements of a PtCu₃/C catalyst in an electrochemical flow cell (EFC) with online electrolyte analysis via ICP-MS (Inductively-coupled mass spectrometry). In the electrochemical flow cell the PtCu₃/C catalyst is subjected to 200 potential cycles between 0.05 V_{RHE} and 1.2 V_{RHE} (scan rate 300 mV·s⁻¹). That is the platinum-alloy catalyst is subjected to electrochemical activation under conditions as also shown in Fig. 2a. The electrochemical flow cell allows to investigate how much Cu is dissolved into the electrolyte in the course of potential cycling. It can be noticed that while indeed Cu dissolution already starts to significantly decrease after 50 cycles (1^{st} to 50^{th} cycle = time between 0 - 383.33 seconds), still a substantial amount of Cu gets removed between the 50^{th} and 200^{th} potential cycle (50^{th} to 200^{th} cycle = time between 383.33 - 1533.33 s) . Therefore, Figure 3a clearly proves that the entire 200 potential cycles are required (for a catalyst, which is not subjected to any other type of activation) until a stable PtCu₃/C catalyst is obtained and thus electrochemical activation is completed.

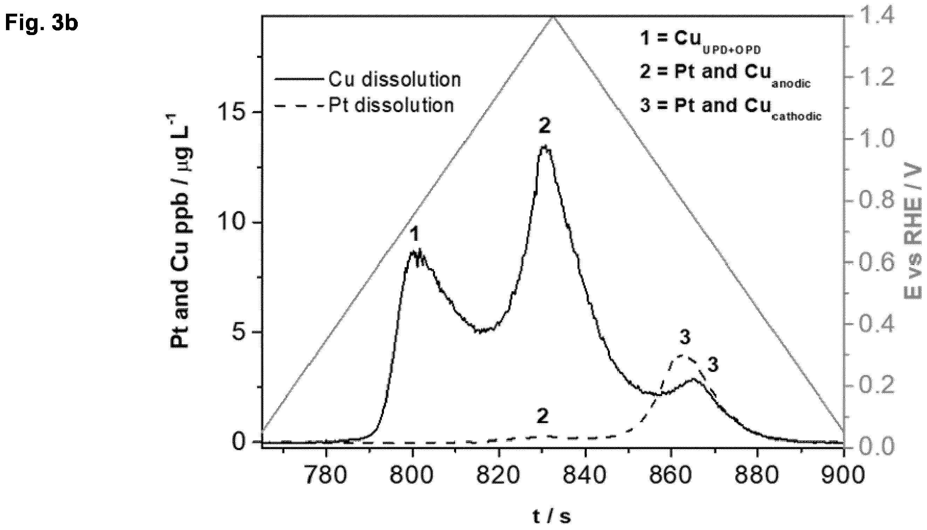

**Figure 3b** shows a measurement of the PtCu₃/C catalyst in an electrochemical flow cell (EFC) at the scan rate of 20 mV·s⁻¹. The measurement allows to identify Cu and Pt dissolution during a single potential cyclic voltammogram. Both metals exhibit an anodic (peak 2) and a cathodic (peak 3) transient dissolution peak. Moreover, Cu has an additional transient dissolution peak 1. This dissolution peak corresponds to OPD and UPD species of Cu on Pt that in too high quantity have a highly negative effect on ORR activity.

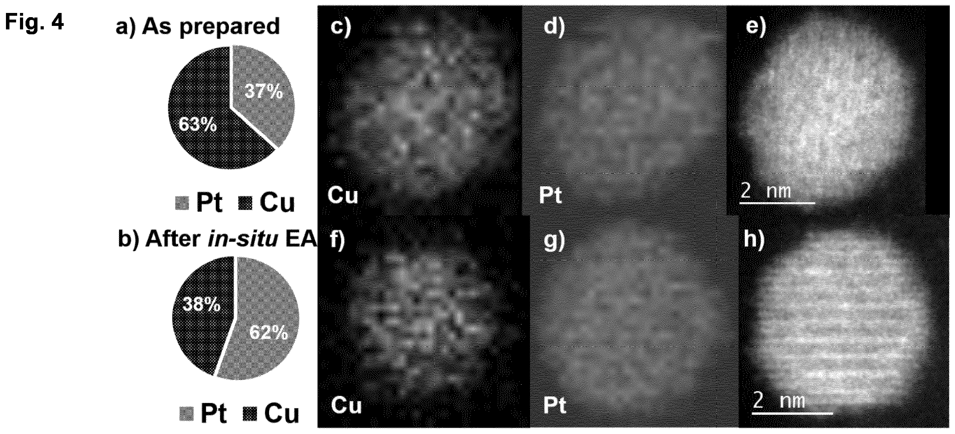

**Figure 4** reveals selected morphological and compositional changes occurring during electrochemical activation (in-situ EA) under potential cycling conditions as shown in Fig. 2a carried out on the as synthesized PtCu₃/C electrocatalyst. Figures 4c to 4e show a single PtCu₃ nanoparticle as prepared, i.e. after synthesis. Figures 4f to 4h show the same particle after being subjected to electrochemical activation. Elemental mapping for Cu (Fig. 4c and 4f) and for Pt (Fig. 4d and 4g) was performed via TEM-EDX (EDX = energy dispersive X-ray spectroscopy). Fig. 4e shows Fig. 4c and 4d overlapping, Fig. 4h shows Fig. 4f and 4g overlapping. The elemental mapping of the as-prepared PtCu₃ nanoparticle shows that both metals (Pt and Cu) are fully mixed (Fig. 4c-e). After 200 potential cycles of electrochemical activation several important differences are observed (Fig. 4f-h). The Cu content in the nanoparticles drops significantly (e.g. from 62 to 37 wt.% for the particular particle displayed in Fig. 2a and 2b). More importantly, as visible from Fig. 4h, apart from Cu_{UPD} and Cu_{OPD} removal, Cu is particularly leached from the near surface region, forming a Pt-rich overlayer over the PtCu₃ core.

In the experiments illustrated in Figures 2 to 4 the as synthesized PtCu₃/C catalyst was subjected to electrochemical activation in an electrochemical cell in order to remove Cu from the catalyst surface and near surface region. From the performed experiments it can be summarized that that an as synthesized PtCu₃/C catalyst requires extensive in-situ electrochemical activation in order to obtain a stable and active platinum-alloy catalyst.

Based on the findings of electrochemical activation reported above, the inventors of the present invention have studied ways of activating platinum-alloy catalysts without the need of an electrochemical cell. That is, the inventors have explored conditions for an effective ex-situ chemical activation.

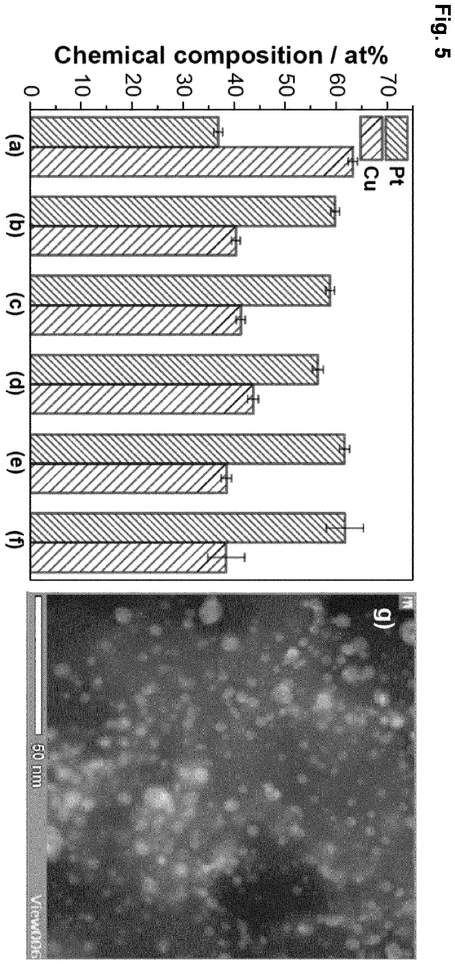

**Figure 5** compares the chemical composition of a PtCu₃/C catalyst obtained from TEM-EDX for at least 4 catalyst regions as large as the catalyst region shown in Fig. 5g. The chemical composition is given of the PtCu₃/C catalyst, as prepared (a), and after 2h (b), 4h (c), 6h (d) in 1 M acetic acid and after exchange of acetic acid with fresh acetic acid with additional acetic acid washing for another 30 minutes (e) (See Reference Example 3). In addition, the composition of the as prepared PtCu₃/C catalyst after being subjected to 200 potential cycles of electrochemical activation is shown in (f). Thus as part of the initial experiment, the duration of one-time acid washing (Reference Example 3) was varied (t = 2, 4 or 6 h). Additionally, the experiment with t = 6 h was repeated with additional exchange of the acid with a fresh one (t = 30 min). Statistically representative TEM-EDX data revealed that the chemical compositions determined after a single acid wash matched well with those obtained during other types of treatments including a 200-cycle in-situ EA (Fig. 5b-f).

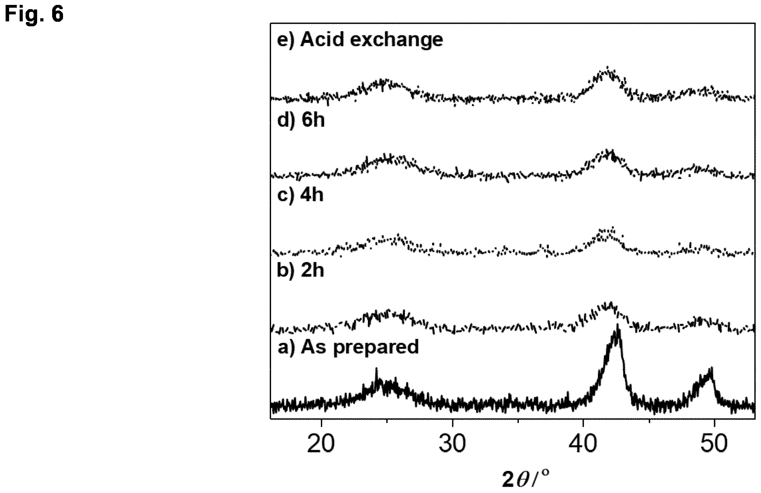

**Figure 6** shows X-ray diffraction spectra of as prepared PtCu₃/C (a) and after (b) 2h, (c) 4h, (d) 6h in 1 M acetic acid as well as (e) after exchange of acetic acid with a fresh acetic acid and extra acetic acid washing for 30 minutes as described in Reference Example 3. The peak at approximately 25° 2θ corresponds to graphitic structure of the carbon support while peaks at approximately 42.4° and 49.3° 2θ correspond to the most intense peaks of PtCu₃ pm3m crystal phase (111 and 200). Comparison of XRD spectra of samples that had been treated with one-time acid washing in 1 M HAc (t = 2, 4 or 6 h) and two-time acid washing (t = 6 h + acid exchange) revealed that already the first and shortest washing (t = 2h) produced a stable structure that did not further develop during additional washing treatment (Fig. 6be) .

In summary, Figures 5 and 6 show that after all of these treatments the crystal structure of the nanoparticles is very similar.

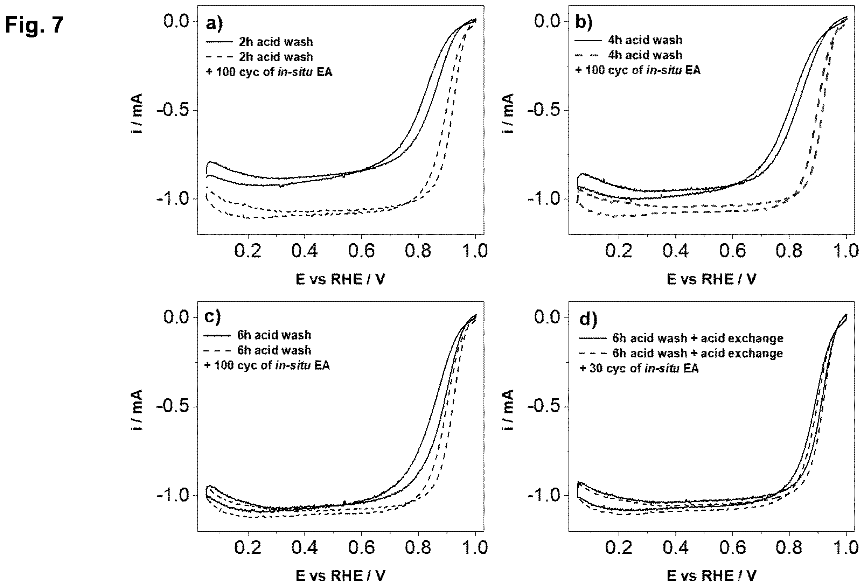

However, despite the compositional and structural similarity of these samples, their electrocatalytic performance measured by TF-RDE varies significantly (Fig. 7-8). This strongly suggests that the main difference is in the surface properties of the samples, possibly in the degree of Cu_{OPD} and Cu_{UPD} surface coverage.

**Figure 7** shows ORR polarization curves (0.05 - 1.0 V_{RHE}, 20 mV·s⁻¹, 1600 rpm, O₂ saturated electrolyte) measured in 0.1 M HClO₄ directly after (a) 2 hours, (b) 4 hours, (c) 6 hours and (d) 6 hours + additional acid exchange *ex-situ* acid wash (full) as described in Reference Example 3. Furthermore, in all cases additional 100 potential cycles (dashed) of *in-situ* electrochemical activation were performed (0.05 - 1.2 V_{RHE}, 300 mV, 600 rpm, Ar saturated electrolyte). As can be seen from Fig. 7a the PtCu₃/C catalyst after being exposed to acetic acid for 2h shows very poor ORR activity. This can be seen from the ORR-curve: First, the so called diffusion limiting current (i.e. about -1.1 mA for 1600 rpm) is not reached for the potential region between 0.05 and 0.8 V_{RHE}. Moreover, the magnitude of the currents is very low in the so called kinetic region of the ORR-curve between about 0.85 and 0.95 V_{RHE}. That is, the PtCu₃/C catalyst after being exposed to acetic acid for 2h shows only slightly negative currents in the kinetic region, indicating poor ORR activity. This means that the overpotential for the ORR is high and the ORR activity low. The diffusion limiting currents in the diffusion limiting region are only reached after the catalyst is subjected to additional electrochemical activation via 100 potential cycles (dashed line). Moreover, the current becomes more negative in the kinetic region after the catalyst is subjected to said additional 100 potential cycles (dashed line). That is, in case of an exposure of the catalyst to acetic acid for only 2h the chemical activation is very poor and a significant amount of further electrochemical potential cycling is required.

The results of the one-time washing experiment reveal that increasing the duration of washing resulted in a higher limiting current, lower overpotential and more stable ORR polarization curve CV (Fig. 7a-c). The longer the washing time, the more the results of ex-situ chemical activation (black full, Fig. 7a-c) approach those obtained when using additional 100 potential cycles subsequent to the chemical activation (dashed line). All the parameters are further improved if acid washing (6h) is upgraded with acid electrolyte exchange (Fig. 7d). However, even in this case no complete activation is achieved.

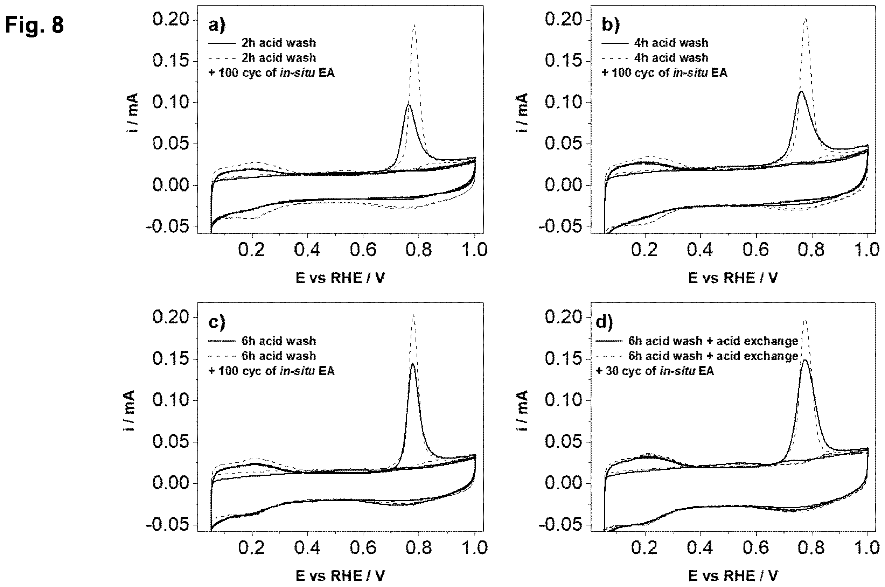

**Figure 8** shows carbon monoxide electrooxidation cyclo-voltammograms as well as the follow-up cycle (0.05 - 1.0 V_{RHE}, 20 mV s⁻¹, Ar saturated electrolyte) measured in 0.1 M HClO₄ directly after (a) 2 hours, (b) 4 hours, (c) 6 hours and (d) 6 hours exposure to acetic acid plus additional acid exchange *ex-situ* chemical activation (full) as described in Reference Example 3 and after additional 100 cycles (dashed) of in-situ electrochemical activation (0.05 - 1.2 V_{RHE}, 300 mV, 600 rpm, Ar saturated electrolyte). While the differences in measured CO electrooxidation peaks and the follow-up cycles are more subtle than in the case of ORR polarization curves, they can still offer a few important conclusions. As mentioned before, it is assumed that the degree of Cu adatoms coverage drops in the order of a >> b > c > d. If so, then the results show that a lower degree of Cu adatoms coverage leads not only to a higher ESA_{CO} (= electrochemical active surface area determined via CO electrooxidation) but also to a more symmetric CO electrooxidation peak that is shifted towards higher potentials. Finally, it also results in more pronounced Pt CV features in the follow-up cycle (black full) in comparison to Pt CV in the follow-up cycle after additional *in-situ* EA cycles (black dash). By performing this experiment, the inventors of the present invention have concluded:
- Time of a single acid wash is important - there exists an equilibrium concentration between Cu surface species and the concentration of Cu in the electrolyte. But more importantly,
- exchanging the acid has shown positive effects that are more important than the prolonged time of a single acid wash.

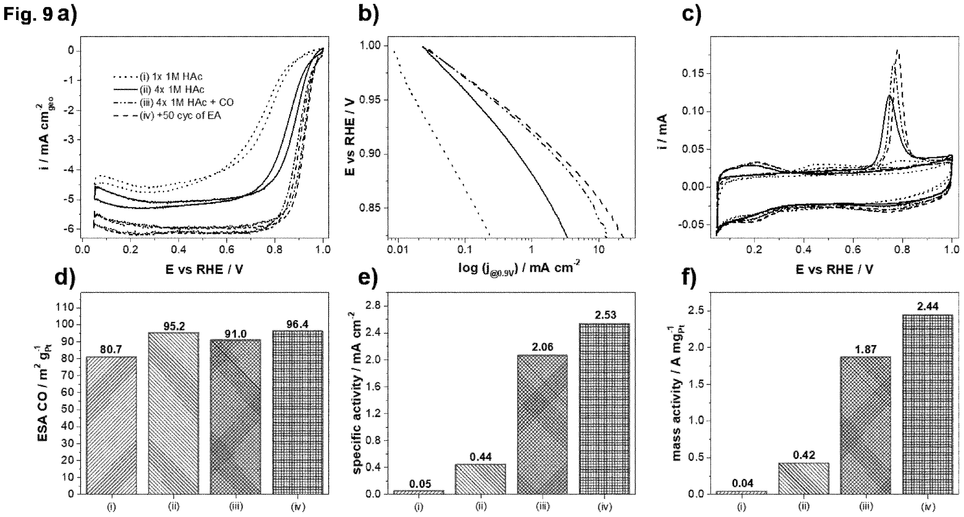

**Figures 9** compares the electrochemical performance of PtCu₃/C catalysts for the ORR after being subjected to different methods of activation treatment (i)-(iv):
(i) PtCu₃/C catalyst is activated by one-time acid washing with 1 M HAc (See Reference Example 2).
(ii) PtCu₃/C catalyst is activated by four-times acid washing with 1 M HAc (See Reference Example 1).
(iii) PtCu₃/C catalyst is activated by four-times acid washing with 1 M HAc, while at the same time being saturated with carbon monoxide (See Example 1).
(iv) Experiment (iii), wherein the catalyst was subjected to additional 50 cycles of in-situ EA (0.05 to 1.2 V_{RHE}, 300 mV·s⁻¹, 600 rpm) and subsequent exchange of electrolyte (0.1 M HClO₄) prior to recording the ORR polarization curves and CO electrooxidation experiment.

**Figure 9a** shows ORR polarization curves of the PtCu₃/C catalyst treated according to (i)-(iv). **Figure 9b** shows the corresponding Tafel plots, which allow to determine the specific activity (SA) of the catalyst. **Figure 9c** provides CO electrooxidation experiments in order to determine the electrochemically active surface area (ESAco). **Figure 9d** compares the ESA_{CO}, **Figure 9e** the SA and **Figure 9f** the MA of the catalysts treated according to (i)-(iv).

Upon inspecting the ORR polarization curves and obtained Tafel plots (Fig. 9a and 9b), the following ORR specific activity trend is found: (i) << (ii) << (iii) ≈ (iv) (Fig. 9c). By careful inspection of CO electrooxidation peaks of (i) - (iv), as well as the follow-up cycle from Fig. 9c, it is observed that the total charge corresponding to CO electrooxidation is similar for all the cases. The comparison of ESA_{CO} of Fig. 9d shows that the differences in ESA between treatments (ii)-(iv) are comparatively small. In the case of treatment (i), it can be noted that the obtained charge is most likely a mixture of oxidation of Cu_{OPD} and Cu_{UPD} species, as well as CO electrooxidation. In this case, the shape of ORR polarization curve and substantially lower limiting current clearly indicate that ORR partially takes place via the much slower two-electron ORR pathway (Fig. 9a, i = dots), while the poorly resolved H_{UPD} region in the follow-up cycle after CO electrooxidation (Fig. 9c, dots) additionally confirms the assumption of substantial Cu adatoms coverage. Subsequently, both specific activity (Fig. 9e) and mass activity (Fig. 9f) are very poor for treatment (i) .

In the case of experiment (ii), acid washing was performed 4 times. Each time a certain equilibrium concentration of Cu adatoms species was removed so, progressively, more and more Cu_{OPD} and Cu_{UPD} was removed from the catalyst surfaces. An immense improvement can be observed in the case of ORR polarization curve after treatment (ii) compared to treatment (i) (Fig. 9a). From the shape of the ORR polarization curve and improvement in the limiting current value it can be noted that ORR takes place on a much higher surface fraction - via the faster ORR four-electron pathway. However, due to remaining blockage of active surface by Cu adatoms that are most likely still present in significant quantity, both the overpotential and the limiting current are still negatively affected. Thus the measured ORR activity is still rather moderate, approximately on the order of pure Pt/C catalysts (i.e. nanoparticulate platinum only catalysts supported on carbon). The improved removal of Cu_{OPD} and Cu_{UPD} is further confirmed by CO electrooxidation, where a peak is observed at about 0.75 V_{RHE}, and by the much better resolved H_{UPD} and Pt hydroxides/oxides regions (Fig. 9c).

In the case of experiment (iii), which is an embodiment of the present invention, apart from using a 4-time acid washing with 1 M HAc, the suspension was additionally purged by CO. Surprisingly it can be observed that the additional exposure to CO results in a significant further improvement in ORR activity. Without being bound by theory this may be attributed to a very strong binding of CO to platinum atoms at the surface of the platinum-alloy catalyst, thus protecting the platinum from re-deposition of already dissolved copper species. It is believed by the inventors that exposure with CO in addition to the acid washing results in disruption of Cu_{UPD} formation. This may explain the dramatic further improvement, which is observed for treatment (iii) (treatment iii = Example 1 of the present invention). As seen in Fig. 9a for treatment (iii), the maximum (geometrical) limiting current was achieved already in the 1^{st} cycle after immersion into electrolyte without any prior cyclic voltammetry. This points towards a complete removal of Cu_{OPD} and making the four-electron ORR pathway the dominant mechanism.

After additional 50 cycles of in-situ electrochemical activation via cyclic voltammetry and an exchange of electrolyte (= treatment iv) only a minor improvement in the specific ORR activity measured at 0.9 V_{RHE} is observed (Fig. 9e), whereas the limiting current remained the same (Fig. 9a, dash).

This indicates that treatment (iii) according to Example 1 of the present invention results in a nearly complete activation of the as synthesized PtCu₃/C catalyst.

The fact that still a minor improvement can be achieved when objected to another 50 potential cycles is presumably because a small quantity of O₂ stabilized Cu-(OH) adatoms from leftover Cu_{UPD} may still block some of the most active sites for ORR in the case of (iii) - slightly affecting the slope of ORR polarization curve, but not the mechanism of the reaction.

Nevertheless, treatment (iii) provides specific activities and mass activities, which are in the range of electrochemically activated catalysts (iv) (Fig. 9e and 9f). This activation is sufficient for the catalysts treated with treatment (iii) to be employed for instance in fuel cell, without the need of further electrochemical activation. In contrast to that other chemical activation treatments, such as treatments (i) or (ii) do result in specific activities or mass activities, which are approximately a factor of 4 or 5 below the activities obtained with the treatment (iii) according to Example 1 of the present invention.

The fact that still a very minor improvement is achieved upon further 50 potential cycles in treatment (iv), furthermore provides evidence, that treatment (iii) does not degrade the catalyst, as otherwise further potential cycling would result in a decrease of catalyst activity. The inventive method therefore, results in an approximately complete activation, however without causing catalyst degradation.

Moreover, the remaining difference between treatment (iv) and treatment (iii) is attributed to the above mentioned minor leftover from Cu_{UPD}. This is attributed to the fact that treatment (iii) was performed in a batch reactor and not a continuous/flow reactor.

The inventors of the present invention have understood that be using a continuous/flow reactor instead of a batch reactor an even further improvement of the excellent chemical activation according to treatment (iii) can be achieved. In a continuous/flow reactor the catalyst is continuously exposed to fresh acidic or basic medium. In this way the less noble metal can be removed even more efficiently from the catalyst surface, thus enabling complete activation.

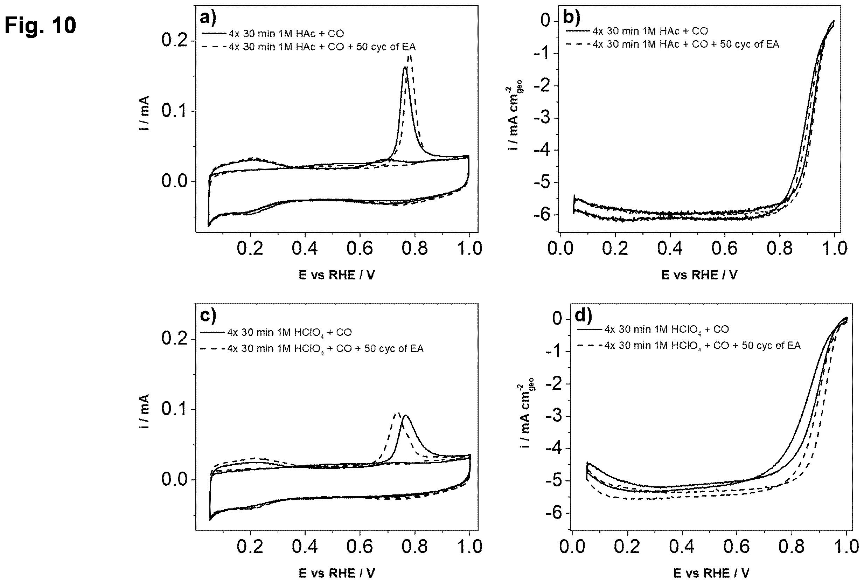

**Figure 10** shows a comparison between ex-situ chemical activation performed in 1 M HAc saturated with CO (Fig. 10a and 10b - Example 1) or 1 M HClO₄ (Fig. 10c and 10d - Example 2). Figures 10a and 10c illustrate CO electrooxidation measurements, while Figures 10b and 10d show ORR polarization curves. The CO electrooxidation curves and ORR polarization curves of the PtCu₃/C catalysts after chemical activation correspond to the curves with full-lines, while the curves with dashed-lines belong to the same catalysts after subjected to another 50 potential cycles of in-situ electrochemical activation (0.05 to 1.2 V_{RHE}, 300 mV·s⁻¹, 600 rpm) .

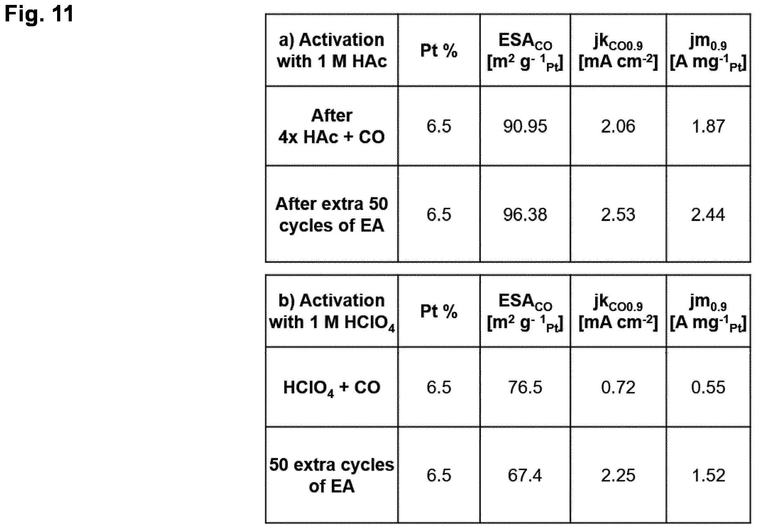

**Figure 11** shows Table 1, which summarizes the results of the experiments of Figure 10. Table 1a shows the values for ESA_{CO}, SA at 0.9 V_{RHE} (= jk_{CO0.9}) and MA at 0.9 V_{RHE} (= jm_{0.9}). When using strong acids, such as 1 M HClO₄ (Example 2, Table 1b) instead of less aggressive acids, such as 1 M HAc (Example 1, Table 1a), exposure to CO in combination with four times acid washing can damage the platinum-alloy catalyst. This results in a loss of ESA_{CO} due to severe particle degradation (Fig. 11b compared to Fig. 11a). This is most likely due to the fact that Pt slowly dissolves in a strong acid such as 1 M HClO₄ in the presence of CO. Thus, using a milder acid, such as 1 M HAc, is beneficial in order to reduce the risk of catalyst degradation. Nevertheless also strong acids or strong bases may be used. However, in this case care must be taken with respect to time of exposure, temperature, repetitions of exposure and other experimental conditions in order to reduce the risk of catalyst degradation. By using mild acids or bases for chemical activation, a less aggressive way for chemical activation is provided, which results in high ESA_{CO}, SA at 0.9 V_{RHE} (= jk_{CO0.9}) and MA at 0.9 V_{RHE} (= jm_{0.9}), while catalyst degradation can be easily avoided.

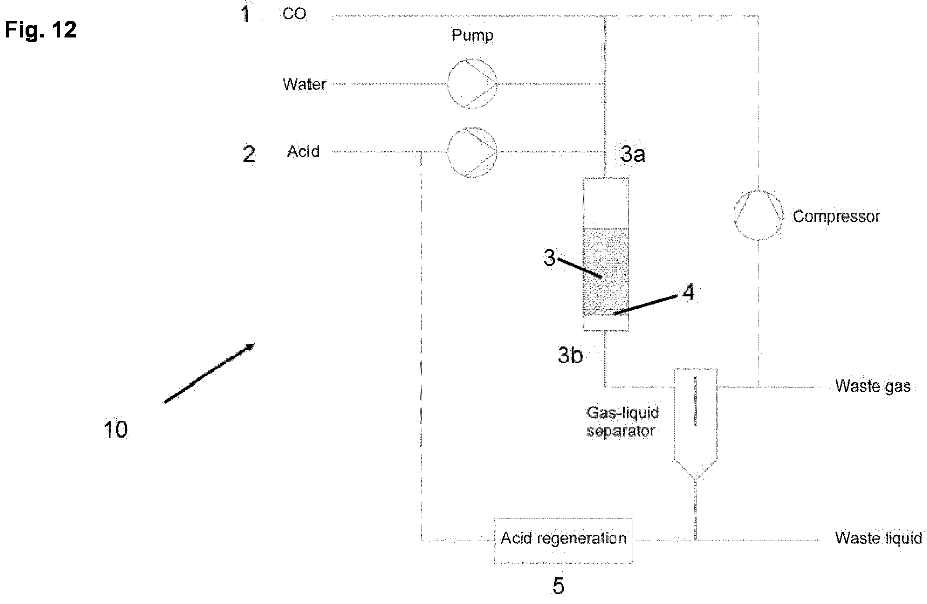

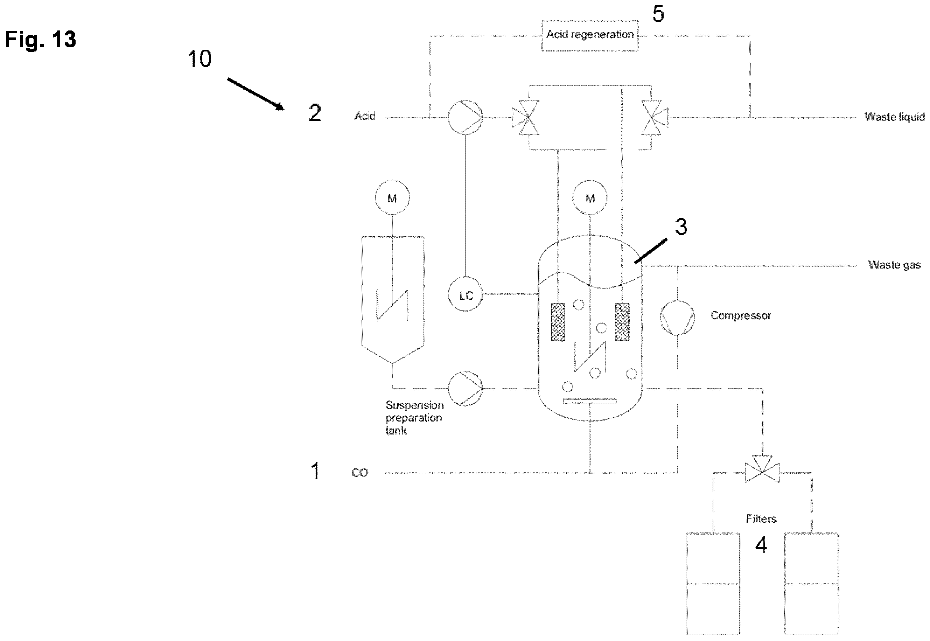

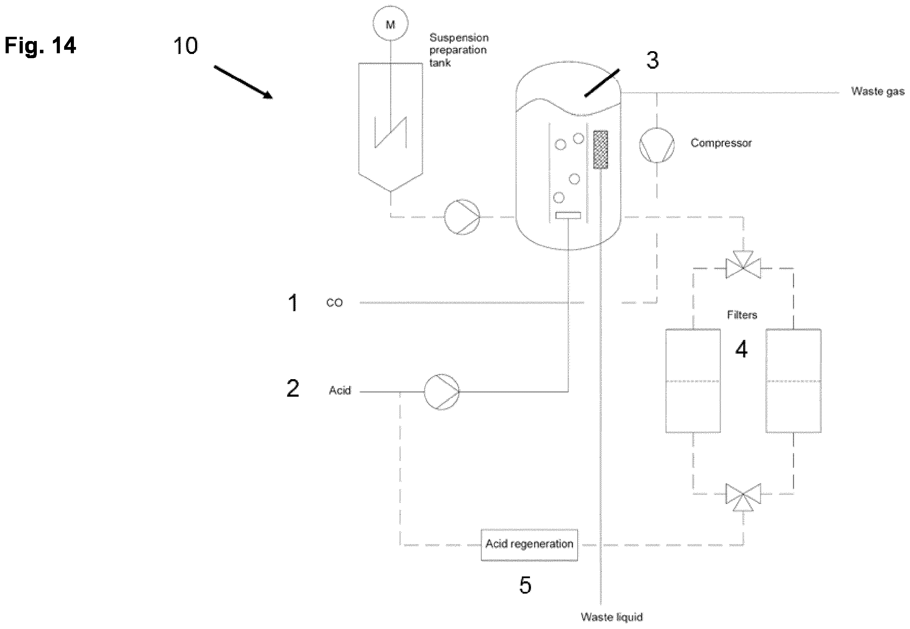

**Figures 12 to 14** show preferred embodiments of devices for carrying out the method of the present invention. The devices illustrate how chemical activation and re-activation of platinum-alloy catalysts according to the method of the present invention can be achieved on an industrial scale.
It is to be understood, that the Figures and description of the Figures are shown for illustration purpose only and as such are not intended to restrict the scope of the invention. Figure 12 shows a device, which is preferably operated batchwise, while devices shown on Figures 13 and 14 can be operated in either batch or continuous way.

**Figure 12** shows a device (10) for carrying out the method of the present invention, which comprises a batch reactor (3), which is preferably a fixed bed reactor (FBR). The reactor has at least one inlet (3a) and at least one outlet (3b). The platinum-alloy catalyst can be filled into the fixed bed reactor (FBR) or a retaining device therein, prior to the start of the treatment. Alternatively, platinum-alloy particles may be transported to the reactor e.g. through piping (not shown in Figure 12), e.g. with the aid of air or any other suitable gas, known as pneumatic conveying. Due to small size of the particles of most common platinum-alloy catalysts instead of pneumatic conveying, catalyst particles may be transported to the reactor in form of a liquid suspension. The reactor can comprise means for separating the catalyst from the acidic or basic medium (4). For instance, the reactor comprises a porous member (4) at its bottom, which holds particles to be treated, while at same time allows gas and liquid to pass. It can also serve as filter (4) separating particles from carrier medium during reactor loading operation. Frit or mesh, made of ceramic, metal or polymer or any other suitable material can serve as porous member (4). Reactor enclosure has connections for introduction of gas, liquid and outlet connection for waste fluids. It also has means (not shown on Figure 12) for loading reactor with particles and removing those particles as part of normal operation, or for inspection and repair as result of reactor blockage or other process interruptions.
More than one liquid (e.g. pure water and acid/base) and more than one gas (e.g. carbon monoxide and nitrogen) can be applied in the method of the present invention for treating and thus chemically activating the platinum-alloy catalyst. For this purpose the device comprises a source of an adsorptive gas (1). In Figures 12-14 the adsorptive gas is shown to be CO. However, said embodiments are not restricted to CO, but also other adsorptive gases may be used. Moreover the device comprises a source of an acidic or basic medium (2). In Figures 12-14 the acidic or basic medium is an acid. However, again said embodiments are not restricted thereto. Each fluid, either gas or liquid, can have either its own connection on reactor enclosure or the connection can be the same for all fluids. Only the latter option is shown on Figure 12. Separate connections can also be provided for means of particle transport e.g. by mentioned liquid suspension conveying. Chemical activation of platinum particles can be achieved either by operation of reactor in three phase mode, known to those, skilled in the art as trickle bed regime or in two phase mode. It will also be apparent to those, skilled in the art, that operation in trickle bed mode requires proper set of operating conditions, most importantly, but not limited to, proper choice of liquid and gas flow rates, to achieve proper liquid and gas distribution over surface of particles, e.g. that surface of particles is entirely covered by liquid. Also a properly designed liquid distributor (not shown on Figure 12) is beneficial above the fixed catalyst bed to enable uniform liquid distribution across the complete cross section of bed of particles. Operation in two phase mode is simpler in respect to flow distribution inside particle bed but it may require higher pressures to dissolve more adsorptive gas (such as carbon monoxide) in the liquid and proper means of contacting of two phases prior to introduction to reactor (not shown in Figure 12). Contacting between the adsorptive gas (e.g. CO) and the acidic or basic medium (e.g. an acid) can be achieved, but not limited to, by aid of static mixers, packed column or simply by using a long enough pipe. It will be apparent to those skilled in the art, that operation at higher pressures requires suitable means of pressure control in the reactor, for example, but not limited to, mechanical back pressure control valves. The device for carrying out the invention is equipped with one or more pumps for introduction of acid and/or water into the reactor. Any kind of pump can be used. Metering pumps such as diaphragm or high pressure piston pumps are however preferred. In case of high pressure operation, high adsorptive gas compressor (not shown on Figure 12) can be included, but preferably carbon monoxide with high pressure at its source, e.g. in gas cylinder is used. Optionally the device can be equipped with an acid/base regeneration module (5) and/or gas recycle compressor. An acid regeneration module (operating e.g. on electrolytic principle) drastically reduces consumption of fresh acid and amount of generated waste. Both factors can considerably reduce operating cost. Gas recycle compressor recycles any unconverted adsorptive gas back to reactor, reducing both amount of fresh carbon monoxide and amount of generated waste gases. If a recycle compressor is used, need for fresh gas compressor is eliminated. Fresh carbon monoxide is introduced into the device at inlet of recycle compressor (not shown on Figure 12). If one or both additional options are used, gas-liquid separator is placed at reactor outlet. Any type of gas-liquid separator can be used but one, operating on gravity separation principle is preferred. A preferred method of treatment of a platinum-alloy catalyst, i.e. chemical activation, in the device is as follows: The reactor is loaded with platinum-alloy particles to be treated. As described, loading can be done by pumping a liquid suspension of particles into the reactor and filtering them on a frit, located at the bottom of the reactor enclosure. Simply pouring a liquid suspension into the reactor can also be applied. Appropriate flow rates of acid and adsorptive gas (e.g. CO) are set. In case dissolved adsorptive gas is used, pressure in reactor is preferably also set. Process is continued until predefined time is reached. This predefined time is at least as long as necessary to achieve chemical activation across entire bed of particles. On-line process measurements may also be used to determine end point of chemical activation. After finishing the chemical activation step, the reactor is preferably flushed with demineralized water or other suitable solvent to remove residues of acid and carbon monoxide out of reactor. Inert gas purging or successive vacuuming may also be applied to remove carbon monoxide from reactor volume where liquid can't reach. Nitrogen can be preferably applied as such inert gas. Other suitable inert and harmless gases can also be applied. The chemically activated platinum-alloy catalyst can be removed from the reactor either manually through an opening provided in reactor enclosure or with aid of the above mentioned transfer means (e.g. by turning treated material into liquid suspension). Preferably this is done by introduction of transfer liquid from bottom of reactor in order to raise particles into suspension by up-flowing liquid. FBR device is preferably used for small production capacities. For larger capacities either mechanically stirred reactor (MSR) device or draft tube reactor (DTR) device, shown on are preferred.

Another embodiment for a device (10) for carrying out the inventive method is shown in **Figure 13****.** The device comprises a mechanically stirred reactor (3) (MSR). MSR reactors are well known and widely used in process industries for applications ranging from mixing, reactions, extractions to crystallization and many more. They are well known to those skilled in the art. Mechanically stirred reactor is in its basic form a vessel, equipped with stirrer. Electrical motor (M) is preferably used as a drive for the stirrer but other types of drive can also be used. Many different well known standard types of stirrers can be employed. Examples are pitched blade turbine, propeller, and Rushton turbine. As will be immediately clear to those, skilled in the art, stirrer types with higher capability to maintain solid particles in suspension are preferred to those with lower capability. Reactor in this embodiment of invention is also equipped with means for introduction and dispersion of gas. Different types of gas introduction and dispersion means can be used, examples being (but not limited to) perforated tubes, porous frits, perforated plates and nozzles. It will be apparent to those skilled in the art, that proper means for gas introduction and dispersion should be designed in such a way, that fine bubbles are obtained and dispersed in a reactor vessel. Such a design increases gas to liquid surface area and this way increases mass transfer of gas into liquid. During chemical activation step at least part of a gas, being introduced into reactor, is composed of adsorptive gas, such as carbon monoxide. Before and after chemical activation, gas can be switched to suitable inert gas (not shown on Figure 13), with purpose being either to remove air, containing oxygen, prior to starting the entire process of chemical activation (or to remove gases containing the adsorptive gas) after shutting down the process of chemical activation. MSR reactor of preferred embodiment of the invention is equipped with at least two filters (4) located inside (shown in Figure 13) or outside reactor vessel (not shown in Figure 13). First option is preferred if reactor is custom built for the process of chemical activation while second one is preferred if existing reactor, built for other application(s) is to be converted for a process of chemical activation of platinum. In the preferred embodiment an acidic or basic medium, e.g. an acid and optionally in addition another liquid, as for example demineralized water for washing and cleaning, is introduced into reactor through one filter and removed through the other. Both filters are connected to a system of at least one stream selection valve. Two three-way valves are shown as an example on Figure 13. Stream selection valves serve to select which filter(s) serve as reactor inlet filters and which filter(s) serve as reactor outlet filters. Reactor outlet filters are used to remove platinum particles from reactor effluent liquid. In the process platinum-alloy particles, filtered out of suspension, may accumulate on a filter surface and its pores, slowly clogging the filter. On the other hand, liquid flowing through the filter in opposite direction may serve to remove particles, accumulated on the filter. Stream selection valves are used to change direction of flow in filters and in that way regenerate filters which are brought from outlet service into inlet service. Any suitable type of filter can be used. Porous candle type sintered filters can be used. It will be apparent to those, skilled in the art, that some overpressure in reactor is preferred to force liquid through outlet filter(s). This is achieved with gas pressure which is controlled by suitable means, for example (but not limited to) mechanical back pressure valve (not shown on Figure 13) on reactor effluent gas stream. Level of liquid suspension inside reactor is maintained by level control means. This may be composed of suitable level sensor, controller and final control element (e.g. pump as shown on Figure 13) or by a mechanical control device, composed of float and valve. Any suitable level sensor may be used but preferably it is suited for three phase operation in a mixture of gas, liquid and solid. As shown in Figure 13, a pump is preferred as means of acid pressure increase but other means e.g. gravity or acid tank (not shown on Figure 13) gas pressurization may be used as well. As in case of FBR device and with same aim and benefits, acid regeneration loop (5) and gas recycle loop may be applied. Reactor can be equipped with suitable means of heating and/or cooling (not shown on Figure 13) which enable to control the temperature inside reactor. The MSR of the device can be operated either in batch or continuous mode but continuous mode is preferred. In batch mode platinum-alloy particles to be treated may be loaded into reactor manually through suitable opening in reactor vessel (not shown in Figure 13) or preferably introduced into reactor in form of a liquid suspension as shown in Figure 13. The suspension can be prepared in a suspension preparation tank and pumped into reactor with a pump. Other means such as gravity or gas pressurization may also be applied. It will be apparent to those, skilled in the art, if a pump is to be used, it should be suitable for suspension, e. g. centrifugal pump. A suspension of chemically treated platinum-alloy catalyst particles is removed from reactor into one or more filters where it is collected as a product. If process is to be operated in continuous mode, preferably more than one filter is used. This enables one filter to be in service, while other filter(s) are in different stages of operation (e.g. unloading, washing and/or drying). Instead of batch type filter(s) one continuous filter like drum or try filter may be applied in continuous mode of operation. Removal of product particles may also be achieved by other mechanical means, e.g. by different types of centrifuges. MSR embodiment of the invention has advantage of being mainly built from standard equipment, readily available on the market. Existing equipment, originally made for other applications may be easily converted to chemical activation process according to MSR embodiment.

The third preferred embodiment of a device (10) for carrying out the inventive method, comprises a draft tube reactor (3) (DTR) and is shown in **Figure 14****.** It is similar to the reactor for hydrogenation of working solution in hydrogen peroxide manufacture, as disclosed in the patent GB 718307 A. The device of Fig. 14 can be operated in batch or continuous mode. The reactor in this embodiment is preferably composed of reactor enclosure with connections, internal filter(s) (4), gas introduction and dispersion means and draft tube(s). Each draft tube is located above gas introduction and dispersion device known as gas sparger. During normal operation, the majority of the reactor volume is occupied by a suspension containing platinum-alloy catalyst particles to be treated. The adsorptive gas is introduced through the sparger at bottom of draft tube, stream of finely dispersed gas bubbles is created inside the tube. This lowers overall density of mixture inside draft tube. Heavier suspension without bubbles, located outside draft tube(s) has a tendency to expel lighter mixture inside and force it upwards the draft tube(s). In this way circular motion is created inside reactor vessels, where mixture moves in upward direction inside draft tube(s) and downward direction in space between vessel and tube(s). Fresh acidic or basic medium, such as an acid, is introduced into the system through gas sparger or other connection or nozzle, located at bottom part of draft tube. In the following we refer to an acid as shown in the Figure. The embodiment is however not restricted to the use of acids. Platinum-alloy catalyst particles to be treated move inside reactor in close similarity to circular liquid motion and are in this way repeatedly exposed to fresh acid being introduced at bottom of draft tube. It was surprisingly discovered that repeated change of fresh acid is particularly advantageous for smooth chemical activation process. This makes this embodiment advantageous for treatment of particles on large scale or where efficient treatment of particles with high final quality is desired. Liquid reactor effluent is treated in filters to remove product particles from waste stream. As in case of previous two embodiments part of the acid may be regenerated and introduced back into reactor. Also part of the adsorptive gas may be recycled to the bottom by aid of compressor. Both additions serve to lower consumption of fresh materials and amount of wastes generated and in turn reducing cost. As in case of MSR device, different means of particle introduction into reactor and removal of product particles from reactor may be applied. Pumping of particle suspension from suspension preparation tank(s) and removing particles by suitable system of filters, as shown in Figure 14 are however preferred. During chemicals activation phase at least part of gas, introduced into reactor is composed of adsorptive gas, such as carbon monoxide. In start-up and shut-down phases the adsorptive gas is replaced by inert gas such as nitrogen (not shown on Figure 14) which serves to remove oxygen or carbon monoxide from reactor and in this way helps to prevent formation of potentially explosive mixtures. Acid may be replaced by water or other suitable solvent in start-up phase to fill reactor. During shut down phase acid replacement with water (or other suitable solvent) helps to remove acid and other soluble components from reactor.

**Examples and Reference Examples:** In the following the inventive method is further explained by means of examples and reference examples:
**Example 1:** 5 grams of as prepared PtCu₃/C electrocatalyst was dispersed in 1 L of 1 M HAc (Merck, glacial, 100%) and ultrasonicated for 2 minutes in an ultrasound bath (Iskra, sonis 4). Afterwards, a magnetic stirrer was added in order to mix the suspension during the *ex-situ* CA protocol. The suspension was stirred under CO saturation for 30 minutes. At the end of the acid wash, the electrocatalyst was filtered and redispersed in 1 L of fresh 1 M HAc (Merck, glacial, 100%) - repeating the same acid wash process 3 more times. After the last filtration, the electrocatalyst was redispersed in 1 L of Mili-Q water and heated until boiling while stirring. This process of Mili-Q water washing was repeated 3 more times in order to ensure a complete neutralization. After the last filtration, the electrocatalysts were left to dry at 50 °C overnight.
**Example 2:** 50 mg of as prepared PtCu₃/C electrocatalyst was dispersed in 50 mL of 1 M HClO₄ (Merck, suprapur) and ultrasonicated for 2 minutes in an ultrasound bath (Iskra, sonis 4). Afterwards, a magnetic stirrer was added in order to mix the suspension during the *ex-situ* CA protocol. The suspension was stirred under CO saturation for 30 minutes. At the end of the acid wash, the electrocatalyst was filtered and redispersed in 50 mL of fresh 1 M HClO₄ (Merck, suprapur) - repeating the same acid wash process 3 more times. After the last filtration, the electrocatalyst was redispersed in 200 mL of Mili-Q water and heated until boiling while stirring. This process of Mili-Q water washing was repeated 3 more times in order to ensure a complete neutralization.

After the last filtration, the electrocatalysts were left to dry at 50 °C overnight.

**Reference Example 1:** 50 mg of as prepared PtCu₃/C electrocatalyst was dispersed in 50 mL of 1 M HAc (Merck, glacial, 100%) and ultrasonicated for 2 minutes in an ultrasound bath (Iskra, sonis 4). Afterwards, a magnetic stirrer was added in order to mix the suspension during the *ex-situ* CA protocol. The suspension was stirred for 30 minutes. At the end of the acid wash, the electrocatalyst was filtered and redispersed in 50 mL of fresh 1 M HAc (Merck, glacial, 100%) - repeating the same acid wash process 3 more times. After the last filtration, the electrocatalyst was redispersed in 200 mL of Mili-Q water and heated until boiling while stirring. This process of Mili-Q water washing was repeated 3 more times in order to ensure a complete neutralization. After the last filtration, the electrocatalysts were left to dry at 50 °C overnight.

**Reference Example 2:** 50 mg of as prepared PtCu₃/C electrocatalyst was dispersed in 50 mL of 1 M HAc (Merck, glacial, 100%) and ultrasonicated for 2 minutes in an ultrasound bath (Iskra, sonis 4). Afterwards, a magnetic stirrer was added in order to mix the suspension during the *ex-situ* CA protocol. The suspension was stirred for 30 minutes. At the end of the acid wash, the electrocatalyst was filtered and redispersed in 200 mL of Mili-Q water and heated until boiling while stirring. This process of Mili-Q water washing was repeated 3 more times in order to ensure a complete neutralization. After the last filtration, the electrocatalysts were left to dry at 50 °C overnight.

**Reference Example 3:** 0.5 g of as prepared PtCu₃/C electrocatalyst was dispersed in 0.5 L of 1 M HAc (Merck, glacial, 100%) and ultrasonicated for 2 minutes in an ultrasound bath (Iskra, sonis 4). Afterwards, a magnetic stirrer was added in order to mix the suspension during the *ex-situ* CA protocol. 50 mL aliquot of the suspension was pipetted out of the reaction mixture at t = 2, 4 and 6 hours. Each aliquot of the suspension was filtered and redispersed in 200 mL of Mili-Q water and heated until boiling while stirring. This process of Mili-Q water washing was repeated 3 more times in order to ensure a complete neutralization. After the last filtration, the electrocatalysts were left to dry at 50 °C overnight. The remaining aliquot of the suspension was filtered and redispersed in fresh 350 mL of 1 M HAc (Merck, glacial, 100%) and ultrasonicated for 2 minutes in an ultrasound bath (Iskra, sonis 4). The suspension in fresh acid was stirred for 30 minutes. At the end of the acid wash, the electrocatalyst was filtered and redispersed in 200 mL of Mili-Q water and heated until boiling while stirring. This process of Mili-Q water washing was repeated 3 more times in order to ensure a complete neutralization. After the last filtration, the electrocatalysts were left to dry at 50 °C overnight.

The description made with reference to exemplary embodiments does not restrict the invention to these embodiments. Rather, the invention encompasses any novel feature and any combination of features, including in particular any combination of features in the claims, even if this feature or this combination is not itself explicitly indicated in the claims or exemplary embodiments.

## Claims

1. A method of treating a platinum-alloy catalyst, comprising the steps of:
A) providing the platinum-alloy catalyst, which comprises platinum (Pt) and at least one metal (M), which is less noble than platinum,
B) exposing the catalyst to an acidic or basic medium, and
exposing the catalyst to an adsorptive gas,
wherein during step B) the catalyst is not subjected to an external electrical current or voltage.

2. Method according to the preceding claim, wherein the adsorptive gas is carbon monoxide (CO).

3. Method according to any of the preceding claims, wherein the platinum-alloy of the platinum-alloy catalyst has the general formula
PtMₓ,
wherein M is at least one metal selected from the group consisting of Cu, Ni, Co, Fe, Ag, Pd, Cr, Ti, Pb, Sn, Mo, Y and Gd,
preferably Cu, Ni, Co, Ag and Pd,
and wherein x fulfils the requirement 0 < x ≤ 5.

4. Method according to any of the preceding claims, wherein the acidic medium comprises an acid, which is selected from the group consisting of carboxylic acids, preferably acetic acid (HAc).

5. Method according to any of claims 1 to 3, wherein the basic medium comprises ammonia (NH₃).

6. Method according to any of the preceding claims, wherein the method is performed without subjecting the catalyst to an external electrical current or voltage.

7. Method according to any of the preceding claims, wherein step B) is performed at a temperature of more than 0°C and less than 35°C, preferably at room temperature.

8. Method according to any of the preceding claims, wherein exposing the catalyst to an acidic or basic medium,
and exposing the catalyst to an adsorptive gas of step B) is performed by dispersing the catalyst in the acidic or basic medium,
wherein the adsorptive gas is at least partially dissolved in the acidic or basic medium and/or
wherein bubbles of the adsorptive gas are present in the acidic or basic medium.

9. Method according to any of the preceding claims, further comprising:
C) separating the catalyst from the acidic or basic medium.

10. Method according to any of the preceding claims, wherein step B) and step C) are repeated at least once, preferably repeated at least three times.

11. Method according to claim 9 or 10, further comprising:
D) washing the catalyst with a solvent, preferably with demineralized water.

12. Method according to any of the preceding claims, wherein step B) is performed in a batch reactor or a continuous reactor.

13. Method according to any of the preceding claims, wherein step B) is performed in a reactor selected from the group consisting of a fixed bed reactor (FBR), a mechanically stirred reactor (MSR) and a draft tube reactor (DTR).

14. Device (10) for carrying out the method according to any of claims 1-13, comprising:
- a source of an adsorptive gas (1),
- a source of an acidic or basic medium (2),
- a reactor (3) for exposing a platinum-alloy catalyst with the acidic or basic medium and exposing the platinum-alloy catalyst with the adsorptive gas, wherein the reactor is comprising:
-- at least one inlet (3a) and
-- at least one outlet (3b)
wherein the source of the adsorptive gas (1) is in fluid connection with the at least one inlet (3a), and
the source of the acidic or basic medium (2) is in fluid connection with the at least one inlet (3a),
- at least one separator (4) for separating the platinum-alloy catalyst from the acidic or basic medium.

15. Device (10) according to claim 14, further comprising means for regeneration (5) of the acidic or basic medium, said means (5) being in fluid connection with both the at least one outlet (3b) of the reactor and the source of the acidic or basic medium (1).
